# EUROPEAN PATENT APPLICATION

(11) **EP 4 786 051 A2**
(43) Date of publication of application: **05.08.2026**
(21) Application number: 26187393.9
(22) Date of filing: 01.02.2024
(51) Int. Cl.: B01L 3/00

(54) **A SOLID-PHASE EXTRACTION APPARATUS WITH A DROP PROTECTION DEVICE**

(30) Priority: 27.12.2023 EP 23220391
(62) Divisional of application: 24155289.2
(71) Applicant: TECAN Trading AG, 8708 Männedorf (CH)
(72) Inventor: BRENNWALD, Mirco, 8712 Stäfa (CH); BOLLI, Beat, 8708 Männedorf (CH)
(74) Representative: Troesch Scheidegger Werner AG

(57) **Abstract**

A solid phase extraction apparatus (1) comprising a base plate (11), a manifold plate (79) oriented parallel and positioned vertical above the base plate thereby defining an elevator shaft (43), the manifold plate being configured to provide positive pressure to a labware component (3) when the labware component contacts the manifold plate. A lift device (23) positioned in the elevator shaft below the manifold plate with a holder (75) for receiving and holding the labware component; the lift device is configured for reciprocally moving the labware component vertically between the base plate and the manifold plate. The apparatus further comprises a drop protection device (64) for selectively shielding the bottom surface of the labware component and thereby shielding the top surface of another labware component positioned below the labware component.

## Description

### FIELD OF THE INVENTION

The current invention relates to a positive pressure solid-phase extraction apparatus including a drop protection device, a solid phase extraction method using the solid phase extraction apparatus enabling the solid phase extraction apparatus to carry out the method.

### BACKGROUND OF THE INVENTION

Solid-phase extraction (SPE) is a solid-liquid extraction method, by which compounds that are dissolved or suspended in a liquid mixture are separated, isolated or purified from other compounds in this mixture according to their physical and chemical properties. The isolated or separated compounds may be analyzed using methods such as, for example mass-spectrometry, gas-chromatography, ultraviolet-light spectroscopy or infrared spectroscopy.

The solid-phase extraction requires a filter or column with a solid-phase that may be conditioned using a conditioning liquid before applying a sample liquid to the filter. The filter includes a filter packaging that may be selectively binding to certain compounds present in the sample liquid. The conditioning liquid and sample liquid is forced through the filter packaging either by applying a pressure on one side of the filter, or by applying vacuum on the opposite side of the filter. Alternatively, centrifugal forces are applied. After the filter has been loaded with the sample liquid, the filter may be washed with a washing liquid to wash out certain undesired compounds from the filter thereby purifying the desired compounds in the filter packaging. Finally, the filter is treated with an eluent liquid and positive pressure is applied once more such that the eluate contains the desired and purified compound for further analysis.

SPE methods require several steps with different reagents and the methods are laborious when executed manually. Laboratories therefore use automated apparatuses for performing the SPE methods to increase efficiency and speed as often a high number of samples need to be analyzed. The SPE methods are executed on dedicated and automated SPE apparatuses that are used as a stand-alone device, or may be integrated in a general laboratory automation apparatus including automated pipetting features. The automated pipetting feature uses a robotic arm for aspirating the sample liquid from a sample container and for dispensing the sample liquid onto a filter plate or filter rack customized for solid-phase extraction. The filter plate includes a plurality of wells and filters arranged in a standardized pattern, for example according to a 96-well plate format having 12 consecutive rows of 8 wells each. The robotic arm of the automatic pipetting feature therefore includes adapters for carrying a plurality of pipetting tips, for example 8 adapters. The pipetting tips used may be disposed after single use to prevent cross contamination between sample liquid. The pipetting head may be used also for aspirating and pipetting the reagent liquids, i.e. the conditioning liquid, the washing liquid or the eluent liquid which increases the consumption of disposable pipetting tips. The speed of the automated extraction method is reduced as the adapter for the 8 pipetting tips needs to move back and forward 12 times between the reagent container and the filter plate for a 96-well plate format and the pipetting tips need to be exchanged before switching to another reagent liquid. The robotic arm is not available for other operations during the reagent aspirating and dispensing steps. Additionally, high volumes of reagent liquids need to be aspirated from open containers that need to be accessible to the pipetting tips which may increase the risk of evaporation of hazardous solvents and the open containers need to be resupplied from larger containers. Direct dispensing from the larger containers may therefore be beneficial.

US9885732B2 discloses a solid-phase extraction apparatus using positive pressure for the filtration. Reagent liquids or sample liquids may be aspirated and dispensed using a rotating arm. The arm can rotate in the plane of the working table of the apparatus and accurately aspirate and dispense liquids between two fixed locations on the perimeter defined by the rotating arm.

US10942193B2 discloses an automated positive pressure solid-phase extraction apparatus including a reagent dispenser apparatus. The SPE apparatus includes a vertically lifted manifold plate configured to apply pressure to the filter plate that is positioned below the manifold plate using a shuttle device. The shuttle can move the filter plate horizontally along a shuttle pathway and a reagent dispenser may dispense reagent liquids into the wells of the filter plate using a dispenser manifold with a plurality of dispensing heads oriented perpendicular to the shuttle pathway. The reagents are pumped from a reagent supply through the dispensing heads of the dispenser manifold to dispense liquids to all wells in a row at once. The row of wells is approached by the manifold using a separate lifting device.

### DESCRIPTION OF THE INVENTION

Cross contamination between sample liquids should be avoided, for example cross contamination of liquids eluted from a filter plate into different wells of a multi-well should be avoided. Eluents or washing liquids should not unnecessarily dilute sample liquids.

It is an objective of the present invention to overcome the disadvantages of the prior art and provide a solid phase extraction apparatus with a drop protection or drop catching device preventing cross contamination of liquids eluted from a labware component such as a filter plate. The drop protection device selectively shields the bottom surface of the labware component and thereby shielding the top surface of another labware component positioned below the labware component

Those objectives are solved by the independent claims, further exemplary embodiments are evident from the dependent claims and the following description including the Figures.

A first aspect of the disclosure relates to a solid-phase extraction apparatus, the solid-phase extraction may be supported by applying pressure or vacuum to a liquid to be filtered through a solid packaging material to assist and speed up the filtering process. The solid-phase extraction apparatus includes a base plate, and the base plate defines a horizontal plane in the x-y direction. A shuttle is mounted on the base plate and the shuttle is configured to carry labware components such that the components may be placed or removed from the shuttle in a vertical direction perpendicular to the horizontal plane. The labware component is in a form-fit engagement with the shuttle in the x-y plane and cannot be shifted. The shuttle, and therewith also the labware component positioned onto the shuttle, is reciprocally moveable along a horizontal length of the base plate thereby defining a shuttle pathway and the shuttle may be moved back and forward along the pathway. The shuttle may halt in the end positions of the pathway or may halt at any intermediate position between the two end positions for transporting or positioning the labware component. The solid-phase extraction apparatus further includes a pressure manifold plate that is oriented parallel to the base plate and the manifold plate is reciprocally moveable in the vertical direction. The manifold plate has a defined geometric shape, for example a rectangular shape and an elevator shaft is defined by the manifold plate that is moved up and down along the vertical direction. The height of the elevator shaft may be variable. The manifold plate is configured to apply a positive pressure to the labware component when the manifold plate contacts the labware component. Positive pressure may be applied using compressed gas such as air or nitrogen. The manifold plate may include a gasket for applying an air-tight fit between the top surface of the labware component and the bottom surface of the manifold plate. The gasket may surround an opening or a plurality of openings of the manifold plate. The manifold plate may include channels for distributing gas to the plurality of openings of the manifold plate and flow restrictors may be included into the channels for an even distribution of the gas pressure across the manifold plate. The manifold plate may be moved downwards for contacting the labware component and providing the air-tight fit. Alternatively, the labware component is moved upwards in the elevator shaft or both the manifold plate and the labware component approach each other for providing the airtight fit between the manifold plate and the labware component. The positive pressure applied to the labware component is used to facilitate the solid-phase extraction process by forcing a liquid through the solid packaging present in the labware component.

The shuttle including the labware component may be moved along the shuttle pathway in and out of the elevator shaft. The labware component may be aligned with and positioned below the manifold plate. The labware component includes an outer shape complementary to the outer shape of the manifold plate, thus a rectangular manifold plate is matched with a rectangular shaped labware component. The shuttle may move in and out of the elevator shaft when the manifold plate is in a vertical position defining an opening available for the shuttle. The height of the opening may vary depending on the position of the manifold plate and may be adjusted to the labware component placed onto the shuttle or to a stack of labware components that are placed onto the shuttle. Two movement steps may be required before positive pressure is applied to the labware component, first the labware component is moved into the opening defined by the vertical position of the manifold plate and subsequently the manifold plate is lowered or the labware component is lifted for providing the contact and the air-tight fit.

The manifold plate includes a liquid reagent dispenser. The liquid reagent dispenser is operatively coupled to the manifold plate such that the manifold plate including the liquid reagent dispenser is vertically moveable with respect to the base plate. The liquid reagent dispenser may be releasably coupled to the manifold plate such that the liquid reagent dispenser may be an add-on for the solid-phase extraction apparatus. Alternatively, the liquid reagent dispenser is permanently coupled and integrated in the manifold plate. The liquid reagent dispenser may dispense a plurality of reagent liquids to the labware component, and the reagent dispenser is configured to automatically switch between different reagent liquids.

The liquid reagent dispenser may include a priming station for priming the liquid reagent to be dispensed to the labware component. The liquid reagent to be dispensed is first primed into a collection bin thereby cleaning the tubing and fluid line from a different liquid reagent previously dispensed. The collection bin of the priming station may be coupled, for example releasably coupled to the manifold plate and move vertically together with the plate. The priming station may include a drain for disposing the primed liquids from the collection bin. The drain may be a simple tubing or may include an arrangement with an adjustable length depending on the position of the vertical position of the manifold plate. The arrangement may be a telescopic arrangement of a plurality of coaxially arranged sleeves, alternatively the arrangement may be a flexible tube or rippled plastic tube.

The reagent dispenser includes a swivel arm or pivoting arm and the arm defines an axis that is oriented parallel to the plane of the manifold plate. One end of the arm is connected to the manifold plate via a hinge. The hinge may be a joint allowing rotation of the swivel arm and the joint may include a bearing. A dispensing tube is located at the other end of the arm and the dispensing tube provides a lumen oriented vertical towards the base plate. The lumen is an opening allowing for accurate dispensing of liquid reagent into the labware component. The dispensing tube may include a conically shaped fluid outlet. The dispensing tube is fluidly connected or connectable to the liquid reagent that may be contained in a liquid reagent supply unit. The reagent dispenser may dispense liquid reagent into the labware component when the lumen is level with the top surface of the labware component. In an embodiment, the reagent dispenser includes a single dispensing tube providing a single lumen. Alternatively, the dispensing tube ends in a dispenser manifold ending in a plurality of lumens, for example two lumens or three lumens of four lumens up to a maximum of eight lumens.

The reagent dispenser further includes a drive mechanism for rotating the one end of the swivel arm around the hinge with the longitudinal axis of the arm being parallel to the base plate or parallel to the manifold plate. The drive mechanism may rotate the swivel arm to predefined angles. The drive mechanism may include an electric drive, a pneumatic drive, a magnetic drive or a hydraulic drive. An example for the electric drive may be an electric motor such as a stepper motor and the rotation may be controlled by changing the number of input pulses (steps). The drive mechanism may include a gearing positioned between the electric drive and the hinge connecting the swivel arm to the manifold plate. The dispensing tube located at the other end of the arm is moved from a so-called parking position within the elevator shaft to a position outside the elevator shaft when the swivel arm is rotated by the drive mechanism. The dispensing tube of the swivel arm is rotated towards an out-of-elevator position. The lumen, or in the alternative embodiment the plurality of lumens, is available for dispensing liquid reagent into the labware component when the other end of the swivel arm has been rotated out of the elevator shaft. The rotation of the swivel arm is reversible such that the arm can rotate back towards the manifold plate or into the parking position.

The reagent dispenser may include a gearing mechanism or gear for rotating the swivel arm and gear up or gear down the rotational speed of a drive axle of the electric motor. The gear includes a first gear wheel with a first drive axle and a first toothing at a circumferential rim of the first gear wheel. The gear includes a second gear wheel with a hub having an opening for engaging a second drive axle and a second toothing at a circumferential rim of the second gear wheel. The teeth of the second toothing are configured to mesh with the teeth of the toothing present on the circumferential rim of the first gear wheel when one of the first or second drive axles is driven for driving one of the first or second gear wheels. The second gear wheel includes an elastic element or a plurality of elastic elements coupling the hub to the circumferential rim of the second gear wheel. The hub of the second gear wheel may elastically move with respect to the circumferential rim of the second gear wheel, or the circumferential rim is biased radially outwards from the hub.

The hub of the second gear wheel is surrounded by an internal rim and the elastic element is, or plurality of elastic elements are coupled at one end to the internal rim and at the other end to the circumferential rim of the second gear wheel. The plurality of elastic elements is selected from an elastic shock absorber, a spring, a leg spring, a compression spring, a torsional spring, elastic spokes or a rubber ring coupling the internal rim of the hub to the circumferential rim of the second gear wheel, or an O-ring sandwiched between the hub and the circumferential rim of the second gear wheel.

In a preferred embodiment, the elastic element includes a plurality of spokes between the hub and the circumferential rim of the second gear wheel and the plurality of spokes are oriented radially between the hub and the circumferential rim, or the plurality of spokes are oriented tangentially between the hub and the circumferential rim.

The second gear wheel may be provided as a monolithic component manufactured using injection molding. The monolithic component and may include a rigid material and an elastic material and may be injection molded using 2- component injection molding.

The second gear wheel may be manufactured using 3-Dimensional (3-D) printing techniques and preferably made from a single polymeric material. The elastic element may be provided as 3-D printed ribs.

The second gear wheel may be made from a polymer such as a polyamide, for example polyamide-4,6; polyamide-6; polyamide-12 or polyamide-6,6.

The hub of the second gear wheel may receive an insert, the insert may provide the second drive axle that is directly or indirectly coupled to the swivel arm. The insert may provide a passage for the dispensing tube.

The swivel arm can rotate over various angles and the dispensing tube is therefore available for numerous dispensing positions such that the swivel arm can adapt to different formats of the labware component, for example to different formats of the well plate. The swivel arm is coupled to the manifold plate that is configured to move vertically for contacting the labware component for applying pressure and the capability of vertical movement is available for the swivel arm when the manifold plate is not contacting the labware component such that the reagent dispenser does not need a separate lifting device for accurate positioning above the labware component. The reagent dispenser in the embodiment has a single lumen which improves the accuracy of the reagent dispensing volume as the liquid is directly pumped from a closed container into the single lumen. Pumping the liquid reagent to a dispensing manifold with a plurality of openings fed by a single inlet may lead to non-uniform distribution of the liquid between the plurality of openings or, the dispensing manifold may require internal flow restrictors, for example precisely manufactured openings, to compensate for differences in the length of the liquid flow path between the openings within the manifold.

The SPE apparatus according to the present invention includes a drop protection device for selectively shielding the bottom surface of the (first) labware component and thereby shielding the top surface of another (second) labware component positioned below the (first) labware component.

The reagent dispenser may include a liquid reagent supply unit including a plurality of liquid reagent containers and each of the containers contains a different liquid reagent. The liquid reagent supply unit further includes a pump, a pump manifold, valves for switching between the liquid reagent containers and tubes connecting the containers to the dispensing tube via the pump and pump manifold. The dispensing tube may end in the priming station for flushing the liquid reagent supply unit before the liquid reagent is switched to another liquid reagent. The dispensing tube may end in the priming station when the swivel arm is not rotated out of the manifold plate or is in the parking position before being rotated for starting liquid dispensing.

The liquid reagent for the liquid reagent supply unit is selected from a conditioning liquid, a washing liquid or eluent liquid. Each liquid reagent is used during a different stage of the solid-phase extraction process and each liquid may be primed into the priming station before supplying the liquid reagent to the labware component.

The elevator shaft of the solid-phase extraction apparatus includes a first lift device for reciprocally moving the manifold plate vertically relative to the base plate. The first lift device may be fixedly coupled to the manifold plate in that only the manifold plate can be moved vertically by the first lift device. The first lift device may include a belt drive or a spindle drive. A threaded nut that is moved up and down the threaded spindle by relative rotation between the nut and the spindle which is provided by the belt drive. Alternatively, a plurality of threaded nuts and spindles are used for vertically moving the manifold plate. The plurality of nuts (or plurality of spindles) are simultaneously and synchronically rotated, for example by a common belt drive enabling precise horizonal movement of the manifold plate.

A second lift device is positioned vertically below the first lift device. The second lift device is located within the elevator shaft defined by the manifold plate and the base plate. The first and second lift device may be vertically guided by guide pillars and the first and second lift device may have separate guide pillars, or they may share the same guide pillars. The second lift device is positioned vertically between the manifold plate and the base plate. The second lift device includes at least one holder for receiving and holding the labware component. The holder may receive and release the labware component such that the labware component is temporarily insertable into the second lift device. The second lift device is configured for reciprocally moving the labware component vertically between the base plate and the manifold plate. The second lift device may include a belt drive or a spindle drive using a threaded nut that is moved up and down a threaded spindle by relative rotation between the nut and the spindle. Alternatively, a plurality of threaded nuts and spindles are used for vertically moving the holder for receiving and holding the labware component. The plurality of nuts (or plurality of spindles) for the second lift device are simultaneously and synchronically rotated, for example by a common belt drive. The first and second lift devices may be driven by two separate electric motors such that the two lift devices may operate independently from another.

Optionally, the second lift device includes the drop protection device including a drop protection plate located between the holder for holding the labware component and the base plate, the drop protection plate being oriented parallel to the base plate and reciprocally moveable horizontally for selectively shielding the bottom surface of the labware component or for selectively covering the top surface of another labware component that is positioned or will be moved below the labware component.

The solid-phase extraction apparatus includes sensors for detecting the horizontal position of the shuttle on the shuttle pathway and sensors for detecting the vertical position of the manifold plate and/or the vertical position of the holder of the second lift device in the elevator shaft. The manifold plate or reagent dispenser includes sensors for detecting the rotational angle of the swivel arm with respect to the manifold plate or with respect to the axis defined by the shuttle pathway.

The detected horizonal or vertical positions and detected rotational angles are used for controlling the solid-phase extraction apparatus using a control unit with a control circuit which is part of the solid-phase extraction apparatus. Alternatively, the solid phase extraction apparatus includes a transmitter-receiver unit and the sensor data may be sent to an external device such as a computer, a computer network or a cloud solution and commands may be received from the external device for controlling the SPE apparatus.

The labware component may be a filter plate or a collection plate including a plurality of openings depending from the top surface of the filter plate (or the collection plate), the plurality of openings are oriented along a pattern on the top surface and a filter is positioned in each opening below a volume available for applying the liquid reagent on top of the filter. The collection plate or filter plate may also be called a collection rack or filter rack. The openings may be arranged according to a standardized ANSI/SLAS pattern. Common patterns are, for example a filter plate with 96, 24, 12 or 6 wells. Using the swivel arm with a single lumen may facilitate the filling of single openings in a row or column of openings of the filter plate (or collection plate) before turning to the next row or columns in the filter plate by rotating the swivel arm and/or moving the shuttle carrying the filter plate. Individual wells may be filled each with different fill volumes and the reagent dispenser with the swivel arm provides for highly flexible liquid filling options.

The control unit directs and controls the position of the filter plate (or the collection plate) along the shuttle pathway, the vertical position of the manifold plate and the rotation of the swivel arm outside the elevator shaft such that the distal end of the dispensing tube is centered with respect to one of the plurality of openings of the filter plate. The filter plate or the collection plate may move along the shuttle pathway and/or the swivel arm may be rotated for filling a subsequent opening in the filter plate and this may be repeated until the desired openings, which may be randomly distributed across the filter plate (or collection plate), are filled with the reagent liquid.

The control unit of the solid-phase extraction apparatus directs and controls the liquid reagent supply unit in that a predefined volume of one of the liquid reagents is pumped via the lumen of the swivel arm into the opening of the filter plate. The control unit may direct different fill volumes to different wells. Once the desired openings have been filled with liquid reagent, the swivel arm is rotated back into the parking position, the shuttle with the filter plate is moved into the elevator shaft and the filter plate may be raised and/or the manifold plate may be lowered providing contact and the air-tight fit. Subsequently pressure is applied to the manifold and the openings such that the liquid reagent is forced through the filter.

The solid-phase extraction apparatus may further include an evaporation unit for evaporating liquids collected from the filter plate. The collected liquid may be the eluate collected in a collection plate after pressurizing the filters with the eluent liquid. The eluate may need to be further concentrated for analytical testing using the evaporation unit. The evaporation unit may be positioned along the shuttle pathway, for example the shuttle may be first moved from an out-of-elevator position into the elevator shaft defined by the vertical position of the manifold plate. The shuttle may move further in the same direction thereby leaving the elevator shaft and entering the evaporation unit. Alternatively, the evaporation unit is moved towards the position of the shuttle carrying the collection plate. The evaporation unit may include an evaporation manifold with a plurality of evaporation sleeves depending from, and oriented towards the base plate of the solid-phase extraction apparatus. The evaporation sleeves may be lowered into the openings of the collection plate using a lift device and hot air or hot nitrogen may be blown from a gas bottle via the manifold to the individual evaporation sleeves. Alternatively, a compressor or a nitrogen gas generator may be used. The eluate present below the opening of each evaporation sleeve is evaporated to concentrate the substances intended for analytical measurements. The SPE apparatus may also be used to replace one liquid used for elution that is not suitable for certain analytical measurement, for another liquid or solvent that is suitable for that analytical measurement. After evaporation the one liquid, the sample may be redissolved in another solvent that is suitable for that analytical measurement, for example mass spectroscopic analysis.

A second aspect of the disclosure relates to a system including a general-purpose laboratory automation apparatus and the solid-phase extraction apparatus. The laboratory automation apparatus includes a working table with a working surface and a first transfer mechanism including a gripper configured to grip, transfer and release a labware component such as the filter plate or collection plate to different positions on the working table. The apparatus includes a second transfer mechanism with a pipetting head configured to aspirate a sample liquid from a sample labware component holding the sample liquid and/or dispense the sample liquid into another labware component such as the filter plate or the collection plate. The sample liquid is the liquid containing the chemical or biological components that needs to be tested. The laboratory automation apparatus further includes a microcontroller for controlling the first and second transfer mechanisms and the liquid handling trough the pipetting head. Optionally, the microcontroller may assist or replace the control unit of the SPE apparatus.

The base plate of the solid-phase extraction apparatus is located on a fixed position on the working table of the laboratory automation apparatus such that the out-of-elevator position is available for the first transfer mechanism for placing the filter plate on the shuttle, or is available for the second transfer mechanism for dispensing the sample liquid into one of the openings of the plurality of openings of the filter plate. The base plate is oriented parallel to the working table. The liquid supply unit of the solid-phase extraction apparatus may not be located on the working table for a space saving arrangement within the system such that the working table is available for other operations or analytical measurement tools such as a microplate reader. The liquid supply unit may be positioned below the working table of the laboratory automation apparatus or aside from the working table outside the laboratory automation apparatus.

The pipetting head of the laboratory automation apparatus may include a plurality of pipetting tips or adapters for receiving disposable pipetting tips, for example 4 or 8 adapters for pipetting tips. Alternatively, the adapter includes fixed pipetting tips. The pipetting head of the laboratory automation apparatus may be dedicated to the handling of the sample liquid whereas the other liquid reagents may be aspirated and dispensed using the liquid reagent dispenser of the solid-phase extraction apparatus. Using the liquid reagent dispenser may provide a flexible laboratory automation system as the pipetting head may be available for other operations in the laboratory automation apparatus and may reduce the demand for disposable pipetting tips. Furthermore, the speed for dispensing the reagents using the reagent dispenser may be increased as the pipetting head does not need to move back and forward to different positions for reagent dispensing. The liquid reagents do not have to be stored in open containers on the working surface of the laboratory automation apparatus and this may increase the space available on the working surface and reduce evaporation as closed containers may be used for the reagents.

A third aspect of the disclosure relates to a solid-phase extraction method using the system including the laboratory automation apparatus and the solid-phase extraction apparatus, the method includes the following steps:
- Presenting a stack of a filter plate and waste tray on the shuttle in the out-of-elevator position of the solid-phase extraction apparatus. Presenting the stack may include sub-steps such as gripping a waste tray from the working table of the laboratory automation apparatus, moving the gripper with the first transfer mechanism to the location of the shuttle of the solid-phase extraction apparatus and releasing the gripper. The procedure is repeated for placing the filter plate onto the waste tray. Optionally there are spacers placed between the labware components or a nozzle separator which will be explained in further detail below. As another option, the shuttle itself includes the waste tray and thus does not have to be placed onto the shuttle in a separate step.
- Loading the plurality of openings of the filter plate with sample liquid using the pipetting head of the second transfer mechanism of the laboratory automation apparatus. The pipetting head may include adapters for catching a plurality of disposable pipetting tips that are placed in a storage unit on the working table. The loading step involves moving the pipetting head with pipetting tips to the location where the sample liquid is stored in a sample container using the second transfer mechanism followed by aspirating the sample liquid. The pipetting head is moved to the location of the stack with the filter plate and the sample liquid is dispensed into the openings of the filter plate.

The filter plate may have to be conditioned before the sample liquid is dispensed into the openings. The conditioning step involves filling the openings of the filter plate with conditioning liquid followed by pressure application with the manifold plate. The conditioning liquid may be dispensed into the openings of the filter plate using the pipetting head of the laboratory automation apparatus, or more preferably, may be dispensed using the reagent dispenser of the solid-phase extraction apparatus.
- Moving the shuttle along the shuttle pathway into the elevator shaft. The shuttle is moved by a shuttle transfer mechanism including an electric drive. The electric drive may use a belt or spindle mechanism for moving the shuttle.
- Lowering the manifold plate of the solid-phase extraction apparatus using the first lift device for contacting the top surface of the filter plate and creating a tight fit between the filter plate and the manifold plate. Pressure is applied to the filter plate via the manifold plate for pressing the liquid sample through the filter plate into the waste tray. As an alternative, the manifold plate is not moved vertically but the stack of the filter plate and waste tray is raised using the second lift device for contacting the manifold plate, or as yet another alternative both the manifold plate is lowered, and the stack is raised for creating the air-tight fit between the filter plate and the manifold plate. A waste tray integrated in the shuttle will not be raised.
- Subsequently, the manifold plate is raised using the first lift device such that there is no contact between the top surface of the filter plate and the bottom surface of the manifold plate. In the alternative embodiments, either the filter plate is lowered or both the filter plate and the manifold plate are moved using the first and second lift devices.
- Moving the shuttle with the stack of the filter plate and waste tray along the shuttle pathway from an in-elevator shaft position towards the out-of-elevator position to an intermediate position where the openings of the filter plate may be covered by the perimeter defined by the swivel arm.
- Filling or loading the plurality of openings of the filter plate with washing liquid using the reagent dispenser of the solid-phase extraction apparatus. The dispensing tube is moved out of the elevator shaft by rotating the swivel arm and washing liquid is dispensed into an opening in the filter plate, a subsequent opening is approached by moving the shuttle and/or further rotating the swivel arm. The fluid line of the liquid reagent supply unit will be switched to the container with the washing liquid using the valve system. The reagent dispenser may be primed in the priming station before dispensing the washing fluid, i.e., before rotating the swivel arm and pumping the fluid into the filter plate as the reagent dispenser was previously used for dispensing the conditioning liquid. The primed liquid is collected from the priming tray via the drain into the waste collector.
- Moving the shuttle including the stack of filter plate and waste tray along the shuttle pathway into the elevator shaft.
- Lowering the manifold plate of the solid-phase extraction apparatus using the first lift device for creating a tight fit between the filter plate and the manifold plate and applying a pressure to the manifold plate for pressing the washing liquid through the filter plate into the waste tray. In the alternative embodiments either the stack of the filter plate is raised or the both the manifold plate and the stack with the filter plate are moved for creating the airtight fit.
- De-contacting the filter plate from the manifold plate by raising the manifold plate and/or lowering the filter plate.
- Unstacking the filter plate from the waste tray by raising the second lift device with the holder for lifting the filter plate from the waste tray. Alternatively, the waste tray is included in the shuttle and the second lift device simply lifts the filter plate from the shuttle.
- As an optional feature, the method may include a step for shielding the bottom surface of the filter plate by moving a drop protection plate below the filter plate. The drop protection plate is part of a drop protection device that will be explained in further detail below.
- Moving the shuttle with the waste tray along the shuttle pathway to the out-of-elevator position.
- Stacking the collection plate on top of the waste tray using the gripper of the first transfer mechanism. Alternatively, the collection plate is directly stacked onto the shuttle (which includes the waste tray). The collection plate may be located on the working table of the laboratory automation apparatus and the gripper of the first transfer mechanism may grip, transfer and release the collection plate for placing the collection plate on top of the waste tray.
- moving the shuttle including the stack of collection plate and waste tray along the shuttle pathway into the elevator shaft. The drop protection plate may still be positioned below the filter plate when moving the collection plate into the elevator shaft but the drop protection plate is retracted before starting the next step: lowering the second lift device.
- Lowering the second lift device holding the filter plate for stacking the filter plate on top of the collection plate.
- Moving the shuttle with the filter plate, collection plate and waste tray (or the shuttle including the waste tray) along the shuttle pathway towards the out-of-elevator position into an intermediate position that is covered by the swivel arm.
- Loading the plurality of openings of the filter plate with eluent liquid using the reagent dispenser. The dispensing tube is moved out of the elevator shaft by rotation and eluent liquid is dispensed into an opening in the filter plate, a subsequent opening is approached by moving the shuttle and/or further rotating the swivel arm. The fluid line of the liquid reagent supply unit will be switched to the container with the eluent liquid using the valve system. The reagent dispenser may be primed in the priming station before dispensing the eluent liquid into the filter plate as the reagent dispenser was previously used for applying the washing liquid.
- Moving the shuttle including the stack of filter plate, collection plate and waste tray along the shuttle pathway into the elevator shaft.
- Lowering the manifold plate of the solid-phase extraction apparatus using the first lift device for creating a tight fit between the top surface of the filter plate and the bottom surface of the manifold plate and applying pressure to the manifold plate for pressing the eluent liquid through the filter plate into the collection plate. Alternatively, the second lift device raises the stack towards the manifold plate or, as an alternative, both the first and second lift devices are moved for approaching the stack and the manifold plate towards each other.
- Raising the manifold plate followed by moving the shuttle to the out-of-elevator position followed by unstacking the stack of the filter plate, collection plate and waste tray using the gripper of the first transfer mechanism.
- Optionally, the collection plate is moved to the evaporation unit for concentrating the eluate.

The concentrated or purified sample in the collection plate is now available for further processing steps and/or analytical testing.

A further aspect of the disclosure relates to a computer program for extracting or concentrating substances from a sample liquid which computer program, when executed by a processor that is integrated in the system including the solid-phase extraction apparatus and the laboratory automation apparatus, is adapted to carry out the method steps presented above. The computer program may be executed in an embedded computing device, such as the control unit of the solid-phase extraction apparatus or the microcontroller of the laboratory automation apparatus, or in a personal computer (PC) which may be interconnected with the laboratory automation apparatus and/or the solid-phase extraction apparatus.

Another aspect relates to a computer-readable medium in which such computer program is stored. The computer readable medium may be a floppy disk, a hard disk, an USB (Universal Serial Bus) storage device a RAM (Random Access Memory), a ROM (Read Only Memory), an EPROM (Erasable Programmable Read Only Memory) or a FLASH memory. A computer-readable medium may also be a data communication network, e.g. the Internet and/or a cloud storage, which allows downloading a program code. In general, the computer-readable medium may be a non-transitory or transitory medium.

Another aspect of the invention relates to the solid phase extraction apparatus further including the drop protection device mentioned above. The SPE apparatus includes the base plate, the manifold plate oriented parallel and positioned vertical above the base plate thereby defining the elevator shaft. The manifold plate being configured to provide positive pressure to the labware component when the labware component contacts the manifold plate. The apparatus includes the second lift device positioned in the elevator shaft below the manifold plate with a holder for receiving and holding the labware component; the second lift device is configured for reciprocally moving the labware component vertically between the base plate and the manifold plate. The apparatus includes the drop protection device with a drop protection plate located between the holder and the base plate, the drop protection plate being oriented parallel to the base plate and reciprocally moveable horizontally for selectively shielding the bottom surface of the labware component that is placed onto the second lift device. The holder for receiving and holding the labware component includes two parallel beams horizontally spaced apart and oriented parallel to the base plate for receiving the labware component between the two parallel beams, the two parallel beams are configured to move simultaneously up or down in the elevator shaft. The drop protection plate may be a metal sheet, or a sheet made from a polymeric material. The drop protection plate may include a plurality of segments that telescopically shift over each other when shielding the labware component. Alternatively, the drop protection plate includes a plurality of hinges, for example living hinges such that the segments may be stacked when the drop protection plate is retracted. The drop protection plate may be coated with a hydrophobic coating.

The drop protection device may be integral part of the second lift device and moveable in the vertical direction together with the second lift device, and the drop protection plate is reciprocally moveable between the two parallel beams. Each of the two parallel beams may include a horizontally oriented guide slot for holding and guiding two parallel edges of the drop protection plate.

The drop protection device for the SPE apparatus includes an electric drive comprising and electric motor and a link-motion system or gearing arrangement for reciprocally moving the drop protection plate between the two parallel beams between a shielded position for shielding the bottom surface of the labware component and an unshielded position not shielding the bottom surface. The link-motion system may include another swivel arm that is different from the swivel arm for the liquid dispenser and one end of the swivel arm is coupled to the rotation axis of the electric motor and the other end of the swivel arm comprises a guide pin engaging a linear guide slot in the drop protection plate. The guide slot engaging the guide pin is preferably oriented perpendicular to the beams.

Each of the two parallel beams of the second lift device includes a first chamfer, and the two first chamfers are oriented along the beam axis of each beam and the two planes of the two chamfers are oriented divergent with respect to the manifold plate for guiding and centering the labware component when two parallel beams move simultaneously upwards in the elevator shaft for collecting a labware component or when a labware component is lowered between the two beams.

Each of the two parallel beams of the second lift device include a second chamfer and the two second chamfers are positioned at a front surface of the beams and oriented divergent to each other providing an entrance section for guiding and aligning the labware component between the beams when the labware component is horizontally moved into the second lift device.

The labware component may be the filter plate and the drop protection device with the drop protection plate selectively shields the bottom surface including nozzle openings when a collection plate is positioned below, or moved below the nozzles of the filter plate by the shuttle device. The drop protection plate may be placed between the bottom surface of the filter plate and the top surface of the collection plate thereby shielding the top surface of the collection plate.

The solid phase extraction apparatus further includes the sensors for detecting the horizontal position of the shuttle on the shuttle pathway, or the horizontal position of the filter plate or collection plate within the elevator shaft. The apparatus may further include sensors for detecting the vertical position of the holder of the second lift device in the elevator shaft holding the filter plate and sensors for detecting the horizontal position of the drop protection plate. The control unit for the SPE apparatus uses the detected horizonal or vertical positions for controlling the solid phase extraction apparatus including the position of the drop protection plate of the drop protection device. The drop protection device may be used in the method for solid phase extraction described above.

Another aspect of the disclosure which is not part of the current disclosure relates to a nozzle separator or a system including a nozzle separator and the filter plate. The nozzle separator may also be called a column barrier providing a liquid protection barrier between the columns in a labware component. During solid phase extraction, sample liquids or reagent liquids are forced through the filter using positive pressure. The liquids exit the filter plate through a nozzle and may spray from the nozzle opening. The reagent liquids are collected in a waste tray and may splash-back towards the nozzles. The spray and splash-back of liquids may adhere to the nozzle openings and lead to cross contamination of liquids filtered in subsequent filtering steps. It may be a further objective of the present disclosure to provide a system including the filter plate and the nozzle separator proving a solution in reducing the risk of cross-contamination between fluids filtered through different nozzles in the filter plate.

A system for solid phase extraction including a SPE filter plate and a nozzle separator and the SPE filter plate includes a plurality of cylinders or columns, each defining a longitudinal axis oriented parallel to another and each having an opening as liquid inlet and a nozzle opposite to the opening as a liquid outlet. The cylinders may be shaped as a plurality of syringes. A filter is located between the opening and the nozzle and configured for extracting chemical or biological components from the liquid. The filter is a solid material and may be a porous packaging. The openings and nozzles are positioned in a plane perpendicular to the longitudinal axis according to a repetitive pattern. The repetitive pattern may be a standardized pattern according to an ANSI/SLAS standard, for example according to a 24-well plate format. The nozzle separator includes a nozzle separator plate with a plurality of openings or passages separated from another and the centers of the plurality of openings are positioned according to the same repetitive pattern for the nozzles. The nozzle separator plate is configured to be stacked below the SPE filter plate whereby each nozzle is received or receivable in an opening of the plurality of openings to separate each of the nozzles of the plurality of nozzles from another. The bottom surface of the SPE filter plate between the nozzles, and/or the nozzle openings are at least partially protected from fluid contamination, either spray from other nozzles or splash-back liquids or droplets, by the nozzle protector plate.

The SPE filter plate may further include a frame for holding the plurality of cylinders or columns and the frame includes a bottom plate and top plate which are both oriented parallel to another. The bottom plate and the top plate are connected by connecting bars which are oriented parallel to the longitudinal axis thereby axially spacing the top plate from the bottom plate. The cylinders are sandwiched between the bottom plate and the top plate of the frame. The frame may have holders for holding the frame and therewith the filter plate. The holders can be gripped by the gripper of the first transfer mechanism of the laboratory automation apparatus.

The nozzles of the cylinders may extend through the bottom surface of the bottom plate of the frame and the openings of the cylinders extends through the top plate of the frame. The openings may be available for the pipetting tips for dispensing a liquid sample into the opening on top of the filter. The bottom surface of the bottom plate and/or the nozzles may be exposed to spray- and/or splash-back droplets when no nozzle separator is used. Each of the plurality of cylinders may include a flange surrounding the opening and the flange abuts the top surface of the top plate of the frame.

The nozzle separator plate is configured to be positioned below the bottom surface of the bottom plate and the nozzles at least partially extend into the openings or passages of the nozzle separator plate. The nozzle separator plate at least partially covers the distal end of the nozzle or a side wall of the nozzle and the sections of the nozzle separator plate between openings protect the bottom surface of the bottom plate of the frame from contamination which could affect further processing steps. The passages of the nozzle separator plate may include a receiving section for receiving the end of the nozzle and a liquid guiding section distal from the receiving section. The receiving section may include a conical shape or cup shape. The liquid guiding section is connected to the receiving section and has an inner dimension smaller than the receiving section. The liquid guiding section may be directly connected to the conical shaped receiving section. The end of the liquid guiding section is located at the bottom surface of the nozzle separator plate and may include a rounded or facetted section. The surface of the nozzle separator plate may be coated with a hydrophobic coating.

The nozzle separator plate may be a disposable labware product made from a metal sheet or from a polymeric material. The metal sheet may be stamped for providing the openings. A nozzle separator plate from a polymeric material may be constructed from a thermoplastic polymer using injection molding. The polymer may be, for example, polypropylene, polyethylene, polystyrene, polycarbonate.

The system may further include a nozzle separator spacer and the nozzle separator plate is configured to be positioned in a stack between the filter plate and the nozzle separator spacer. The nozzle separator spacer may be a reusable labware component. A waste tray may be stacked below the nozzle separator spacer.

Positive pressure is applicable to filter plate via the openings of plurality of cylinders using the manifold plate.

These and other aspects of the invention will be apparent from and elucidated with reference to the embodiments described hereafter.

### BRIEF DESCRIPTION OF THE DRAWINGS

Embodiments of the present invention are described in more detail with reference to the attached drawings presenting:
- Figure 1:: Perspective view of a solid phase extraction apparatus,
- Figure 2:: A system including the SPE apparatus, a waste collector, a dispenser control box and an evaporator control box,
- Figure 3:: A system including a laboratory automation apparatus, the SPE apparatus and liquid reagent supply unit positioned next to the laboratory automation apparatus,
- Figure 4:: A system including a laboratory automation apparatus, the SPE apparatus and liquid reagent supply unit positioned below the working table of the laboratory automation apparatus,
- Figure 5:: Perspective view of SPE apparatus without cover presenting the lift devices,
- Figure 6:: Perspective view of SPE apparatus without cover presenting the lift devices,
- Figure 7:: Perspective view of SPE apparatus without cover presenting the swivel arm of the reagent dispenser in the parking position,
- Figure 8:: Detail of the reagent dispenser with the swivel arm in the parking position,
- Figure 9:: Perspective view of SPE apparatus without cover, the swivel arm of the reagent dispenser has been rotated out of the parking position into a dispensing position,
- Figure 10:: Detail of the reagent dispenser with the swivel arm rotated out of the parking position into the dispensing position,
- Figure 11:: Cross section for the reagent dispenser with the swivel arm and priming station,
- Figure 12:: Top view of the swivel arm presenting the range of motion for the dispensing tube on a 96-well plate,
- Figure 13:: Gearing mechanism for driving the swivel arm,
- Figure 14:: Top view for the gearing mechanism,
- Figure 15:: Alternative embodiment for the second gear wheel,
- Figure 16:: Overview for the drop protection device of the second lift device,
- Figures 17a: and 17b: Details for the beams of the second lift device with the drop protection plate,
- Figure 18:: SPE apparatus presenting the evaporator unit,
- Figure 19:: SPE apparatus presenting the evaporator unit,
- Figure 20:: Exploded view for the pressure manifold plate,
- Figure 21:: Assembly of nozzle separator plate and spacer for a 96 well-plate format,
- Figure 22:: Filter plate or filter rack (24 well-plate format) with nozzle separator plate positioned below the filter plate,
- Figure 23:: Cross section for a filter plate (96-well plate format) stacked on top of a spacer holding the nozzle separator,
- Figure 24:: SPE apparatus, the filter plate positioned on the out of elevator position of the shuttle pathway,
- Figure 25:: SPE apparatus, the filter plate positioned in the elevator shaft below the manifold plate, the bottom surface of the filter plate is shielded by the drop protector and the collection plate is on the out of elevator position of the shuttle pathway,
- Figure 26:: Schematic representation for the system of a laboratory automation apparatus and SPE apparatus with a waste tray placed onto the shuttle in the out-of-elevator position,
- Figure 27:: Schematic representation for the system of Figure 26, gripper of the first transfer mechanism stacking a filter plate on top of the waste tray,
- Figure 28:: Schematic representation for the system of Figure 26, shuttle moved the stack to a position where the swivel dispenser can dispense conditioning fluid to the filter plate,
- Figure 29:: Schematic representation for the system of Figure 26, shuttle moved into elevator shaft and manifold plate lowered with the first lift device; pressure is applied via the manifold plate,
- Figure 30:: Schematic representation for the system of Figure 26, shuttle moved to the out of elevator position and the sample liquid is aspirated and dispensed into the filter plate using the second transfer mechanism,
- Figure 31:: Schematic representation for the system of Figure 26, shuttle moved into the elevator shaft,
- Figure 32:: Schematic representation for the system of Figure 26, manifold plate lowered using the first lift device and pressure is applied via the manifold plate,
- Figure 33:: Schematic representation for the system of Figure 26, shuttle moved to intermediate dispensing positions for dispensing washing liquid into the filter plate,
- Figure 34:: Schematic representation for the system of Figure 26, shuttle moved into the elevator shaft and manifold plate lowered using first lift device; pressure is applied to the filter plate using the manifold plate,
- Figure 35:: Schematic representation for the system of Figure 26, second lift device lifts the filter plate from the waste tray and optionally the drop protection plate shields the bottom surface of the filter plate,
- Figure 36:: Schematic representation for the system of Figure 26, shuttle is moved to the out-of-elevator position and collects a collection plate from the first transfer mechanism,
- Figure 37:: Schematic representation for the system of Figure 26, shuttle with the stack of the waste tray and the collection plate is moved into the elevator shaft,
- Figure 38:: Schematic representation for the system of Figure 26, shuttle with the stack of the waste tray and the collection plate is moved into the elevator shaft and the optional drop protector plate has been retracted from the bottom surface of the filter plate,
- Figure 39:: Schematic representation for the system of Figure 26, second lift device is lowered to stack the filter plate on top of the collection plate,
- Figure 40:: Schematic representation for the system of Figure 26, the shuttle is moved to an intermediate dispensing position; first lift device is lowered and the swivel arm rotated for dispensing eluent liquid into the filter plate,
- Figure 41:: Schematic representation for the system of Figure 26, the shuttle is moved into the elevator shaft and the manifold plate is lowered by the first lift device; pressure is applied for collecting the eluate in the collection plate,
- Figure 42:: Schematic representation for the system of Figure 26, the shuttle is moved to the out-of-elevator position and the first transfer mechanism removes the filter plate from the collection plate which is now available for further processing,
- Figure 43:: Schematic representation for the system of Figure 26, shuttle with the stack of the waste tray and filter plate. Optionally the nozzle protector has been positioned between the filter plate and the waste tray.

### DETAILED DESCRIPTION OF EXEMPLARY EMBODIMENTS

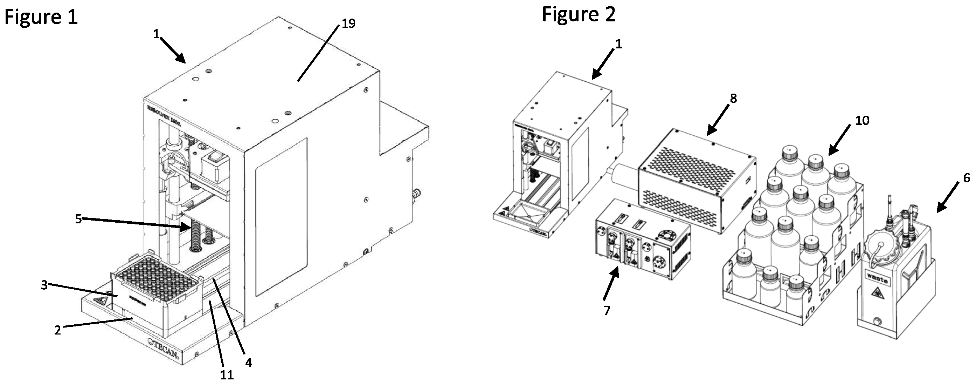

A perspective view of a solid phase extraction apparatus 1 is presented in Figure 1. The SPE apparatus includes a shuttle 2 that can be moved along a shuttle pathway 4. A labware component 3 may be positioned on the shuttle and the shuttle can move along shuttle pathway 4 into an opening 5 of the SPE apparatus using an electric drive. The opening 5 defines an entrance for an elevator shaft that will be explained below. The SPE apparatus includes a base plate 11 providing platform for mounting the components of the SPE apparatus which are enclosed by a cover 19. A system including the SPE apparatus 1, a waste collector 6, a dispenser control box 7, an evaporator control box 8 and a liquid reagent supply unit 10 is shown in Figure 2. The reagent liquids used during solid phase extraction are collected via a tubing system in the waste collector 6 and the liquid reagents may be pumped from the suppl unit 10 into a reagent dispenser using the dispenser control box 8. The solid phase extraction apparatus optionally includes an evaporation unit for evaporation and concentration of extracted sample liquids and the evaporation unit is controlled by the evaporator control box 8.

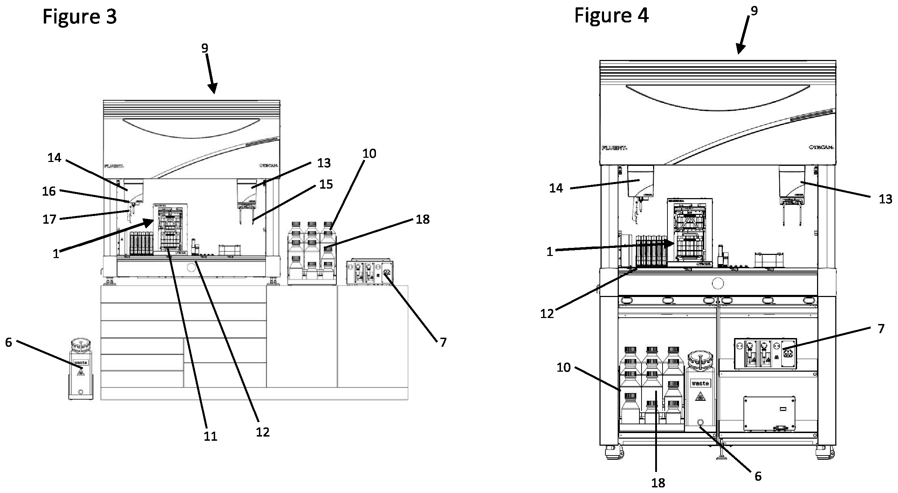

A system including a laboratory automation apparatus 9, the SPE apparatus 1 and a liquid reagent supply unit 10 is shown in Figure 3. The liquid reagent supply unit 10 and waste collector 6 are positioned next to the laboratory automation apparatus 9. The laboratory automation apparatus 9 includes a working surface 12 and the base plate 11 of the SPE apparatus 1 is mounted onto the working surface 12 of the laboratory automation apparatus 9. The laboratory automation apparatus 9 includes a first transfer mechanism 13 with a robotic arm for moving a gripper 15 to different positions on the working surface 12 and for controlling the gripper 15 for gripping and releasing labware components that are positioned on the working surface 12 or onto the shuttle 2 of the SPE apparatus 1. The laboratory automation apparatus 14 further includes a second transfer mechanism 14 with a robotic arm for moving a pipetting head 16 to different positions on the working surface 12. The pipetting head 16 includes a plurality of adapters for releasably holding a plurality of pipetting tips 17. The pipetting head 16 is configured to aspirate or dispense liquids using the pipetting tips 17.

Another embodiment for a system including a laboratory automation apparatus 9 and SPE apparatus 1 with the liquid reagent supply unit 10 positioned below the working surface 12 of the laboratory automation apparatus 9 is shown in Figure 4. The waste collector 6 is positioned below the working surface 12. Placing the liquid reagent supply unit 10 and waste collector 6 aside from the working surface (Figure 3) or below the working surface (Figure 4) provides sufficient space available on the working surface 12 for other labware components or analytical measurement equipment. The liquid supply unit 10 includes a plurality of liquid reagent containers 18 that can be filled with reagents such as the conditioning liquid, the washing liquid, or the eluent liquid to supply an SPE extraction process. The containers 18 are fluidly connected to the SPE apparatus using tubes and a pump system including valves for switching between the different reagent containers.

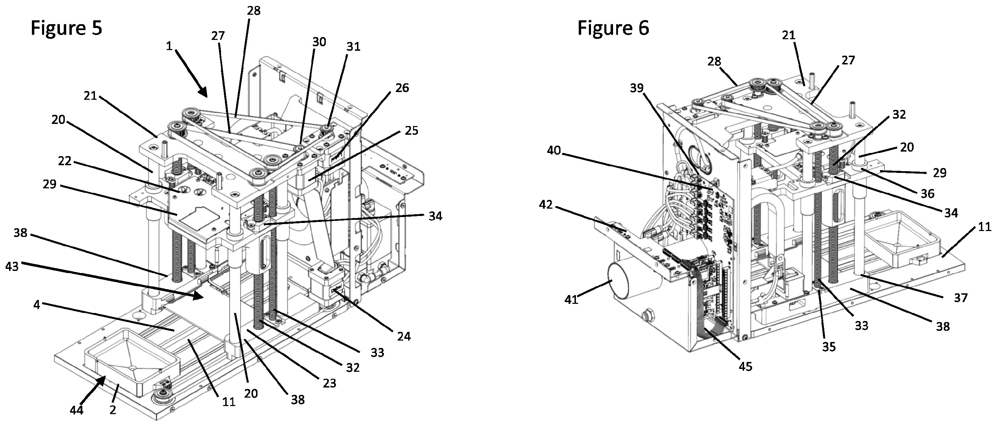

The SPE apparatus with removed cover 19 is shown in Figures 5 and 6 presenting the basic drive mechanisms for a first lift device 22 configured to vertically move a manifold plate, and a second lift device 23 positioned below the first lift device 22. The second lift device 23 is configured to elevate a labware component that can be placed or moved into the second lift device 23. The SPE apparatus includes four guide pillars 20 connecting a roof plate 21 to base plate 11. The roof plate 21 and base plate 11 are oriented parallel to another. The first lift device 21 includes a holding plate 29 for holding the manifold plate that is used for applying positive pressure to a labware component such as a filter plate. The first lift device 22 can move the holding plate 29 up and down between the roof plate 21 and base plate 11 thereby defining an elevator shaft 43. The first lift device 22 includes an electric motor 25 for driving two threaded rods 32. A drive pulley 30 is coupled to the drive axle of the electric motor 25 and simultaneously drives the two threaded rods 32 via toothed drive belt 27. The threaded rods 32 engage threaded inserts 34 that are part of or coupled to the holding plate 29 thereby providing a spindle drive for the first lift device 22. The holding plate 29 includes four sleeve shaped bushings 36 which surround the four guide pillars 20 for guiding the holding plate 29 during the up and down movements thereby retaining the holding plate in a horizontal orientation with respect to the base plate 11, see Figure 6.

The second lift device 23 includes two beams 38 which are oriented parallel to another and each beam includes a longitudinal groove providing a guide rail for a drop protector plate that will be described in detail further below. Each of the two beams 38 includes two bushings 37 surrounding the guide pillars 20 for axially guiding the two beams in the vertical direction within the elevator shaft 43, see Figure 6. The second lift device 23 includes an electric motor 26 for driving two threaded rods 33. A drive pulley 31 is coupled to the drive axle of the electric motor 26 and simultaneously drives the two threaded rods 33 via toothed drive belt 28. The threaded rods 33 engage threaded inserts 35 that are part of or coupled to the beams 38 thereby providing a spindle drive for the two beams of the second lift device 23.

The shuttle 2 provides a platform for placing labware components and the platform is oriented parallel to the base plate 11. The shuttle 2 includes a top surface designed to engage the labware component 3, for example a bottom surface of the labware component such that the labware component 3 cannot be shifted in the x-y plane (parallel to the base plate 11) due to a form-fit engagement. The labware component can be lifted from or placed onto the shuttle 2 along a z-axis that is perpendicular to the base plate 11. The shuttle 2 can be moved along a horizontal length in the plane of the base plate defining the shuttle pathway 4 from an out-of elevator position 44 into the elevator shaft 43. The shuttle is moved with an electric shuttle drive including an electric motor 24. The first lift device 22, the second lift device 23 and the electric shuttle drive include sensors for determining the positions of the holder 29 for the manifold plate, the vertical position of the beams 38 or the position of the shuttle 2 on the shuttle pathway 4. The sensors may be included in the electric motors, for example encoders for counting the number of steps of a step motor or the number of rotations of a DC motor. The number of steps or rotations can be assigned to defined positions for the holder 29 or the beams 38. Alternatively, the sensors are separate from the electric motors such as linear position sensors.

The SPE apparatus 1 is controlled using a control circuit 39 that includes a printed circuit board 40 (PCB) providing a platform for the electronic components, switches or integrated circuits (Figure 6). The control circuit 39 may include a connector PCB 42 for connecting to, for example a personal computer, to a user interface or to another microcontroller of a laboratory automation apparatus. The connector PCB 42 is connected to the control circuit 39 using a strip conductor 45. The connector PCB 42 may include a transmitter/receiver for a wireless connection to another device such as a personal computer or a smart phone. Alternatively, the transmitter/receiver may feed or receive data from a cloud solution.

The SPE apparatus includes a vapor exhaust 41 that guides vapors from the elevator shaft 43 to the outside of the SPE apparatus as the exhaust 41 is guided through a passage in the cover 19.

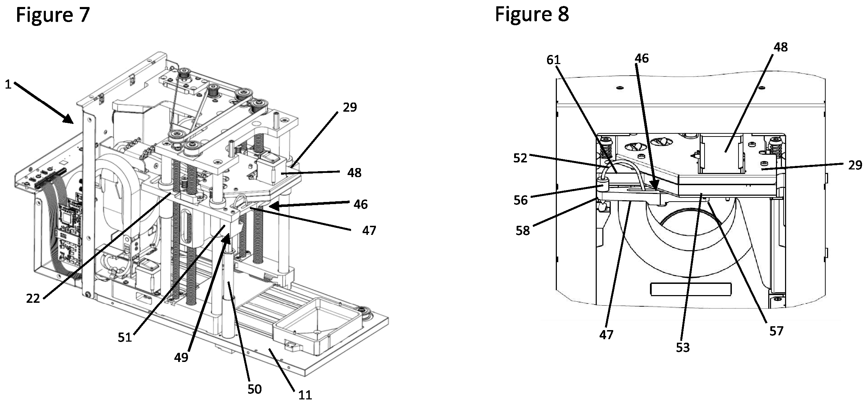

The SPE apparatus 1 includes a reagent dispenser 46 that includes a swivel arm 47, an electric motor 48 for rotating the swivel arm 47 and a priming station 49 as depicted in Figure 7. The reagent dispenser 46 may be integral part of, or mounted onto the holding plate 29 and can therefore be moved up and down in the z-direction using the first lift device 22. The reagent dispenser 46 may be fixedly mounted onto the holding plate 29 or may be releasably connected to the holding plate 29. The reagent dispenser 46 may be configured as an optional add-on unit to a holding plate 29 that is configured to receive the add-on unit. The priming station 49 includes a priming tray 51 for receiving the liquid to be primed, for example the eluent liquid needs to be primed if previously washing liquid has been dispensed with the reagent dispenser 46. The priming station 49 further includes a drain 50 for collecting the primed liquids into the waste collector 6. The drain 50 is provided as a collection of coaxially arranged tubes with one end connected to the priming tray 51 and the other end coupled to the base plate 11. The tubes of the drain 50 can telescope relative to another for adapting the length of the drain 50 to the specific z-position of the holding plate 29.

A detail for the reagent dispenser 46 with the swivel arm 47 in a parking position is presented in Figure 8. The swivel arm 47 includes a first end 57 and a second end 58 defining an axis between the two ends which is parallel to the plane of the holding plate 29. The axis for the swivel arm in the parking position is perpendicular to the axis defined by the shuttle pathway 4. The second end 58 of the swivel arm 47 is positioned in a cut-out 61 of the holding plate 29 when the swivel arm is in the parking position or not rotated position (zero rotational angle). The swivel arm is within the rectangular contour defined by the holding plate (including the manifold plate) if there was no cut-out 61 for the holding plate and therewith is the second end 58 within the elevator shaft defined between the holding plate 29 and the base plate 11. The first end 57 of the swivel arm 47 is connected to the holding plate 29 via a hinge 53 such that the swivel arm, or the first end 57 of the swivel arm can rotate around the hinge 53. The electric motor 48 drives and controls the rotational angle of the swivel arm 47. A dispensing tube 52 is guided by the swivel arm into a bushing 56 located at the send end 58 of the swivel arm. The dispensing tube 52 is fluidly connected or connectable to the liquid reagent supply unit 10.

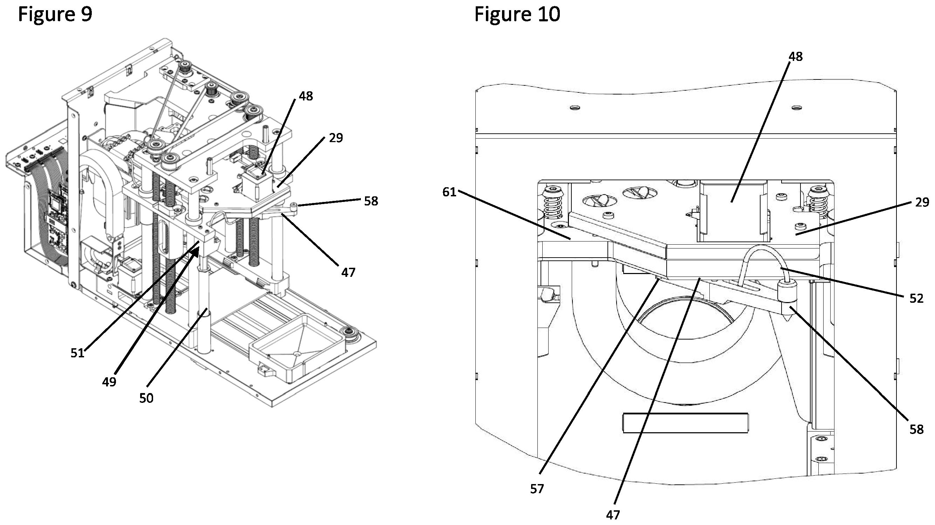

An overview of the SPE apparatus with the swivel arm 47 rotated over a rotational angle to an out-of-elevator position (or dispensing position) is presented in Figure 9. A detailed view is presented in Figure 10. The electric motor 48 has rotated the swivel arm 47 out of the parking position (Figure 8) such that the second end 58 projects outwards from the holding plate 29.

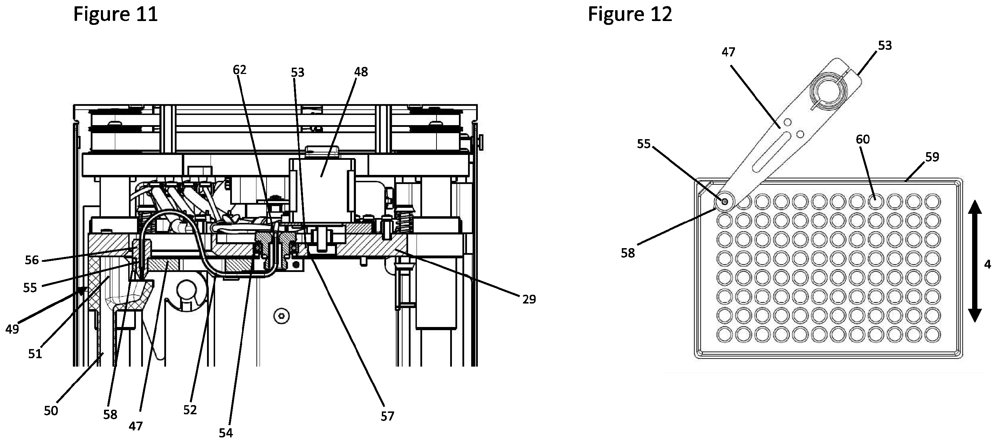

A cross section for the swivel arm 47 and the priming station 49 is shown in Figure 11. The hinge 53 couples the electric motor 48 to the swivel arm 47 and the hinge may include a gearing mechanism to gear up or gear down the rotational speed of the drive axle of the electric motor. The drive axle of the electric motor may include a pinion engaging a gear wheel that is coupled to the first end 57 of the swivel arm 47. The first end 57 of the swivel arm 47 is coupled to the holding plate 29 via bearing 54 and may further include a passage 62 for the dispensing tube 52. The dispensing tube 52 is guided through the bushing 56 located at the second end 58 of the swivel arm such that the end section of the dispensing tube 52 is oriented along the z-axis. The end of the dispensing tube 52 provides a lumen 55 for dispensing the reagent liquids. The reagent liquids are dispensed in the priming tray 51 of the priming station 49 when the swivel arm is in the parking position such that the primed liquids can be collected in the waste collector 6 via the drain 50. In another embodiment, the dispensing tube 52 ends in a dispensing manifold such that a plurality of lumens are available at the second end 58 of the swivel arm 47. Liquid reagent can thus be dispensed in, for example, 2 or 3 wells at once.

A schematic representation for the projection of the swivel arm 47 onto a 96-well plate 59 is shown in Figure 12. The well plate 59 includes wells 60 and the swivel arm 47 can rotate around hinge 53 such that the second end 58 can rotate above the top surface of the 96-well plate to different well positions. The lumen 55 of the dispensing tube can be moved providing a range of motion for aligning the lumen 55 with a center of a well 60 for dispensing. The lumen can be moved further to another well. The well plate 59 can move along the shuttle pathway 4 and combining the linear and rotational movements ensures that all wells 60 can be subsequently filled with liquid reagent via the lumen 55. The lumen 55 of the dispensing tube 52 is preferably moved close to the top surface of the well plate 59 for accurate dispensing. The position of the reagent dispenser 46 along the z-axis can be adjusted since the reagent dispenser is coupled to the holding plate 29 which can be moved along the z-direction using the first lift device 22. The first lift device used for moving a manifold plate for applying positive pressure to the filter plate when the filter plate is within the elevator shaft is therefore also used for vertically moving the reagent dispenser for adjusting the gap between the top surface of the filter plate and the lumen when the filter plate is outside the elevator shaft. The height of the gap is controlled using the sensors or a separate optical sensing system. In an alternative embodiment, the reagent dispenser is moved vertically using a separate lift device.

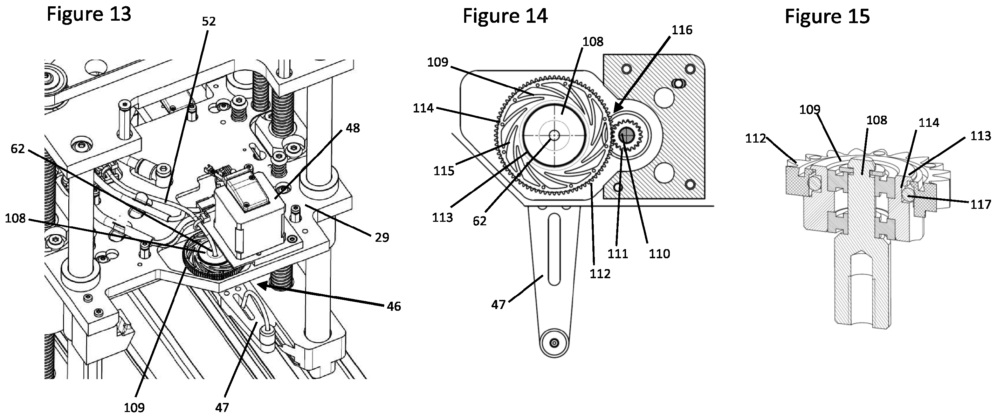

Details for the gearing mechanism 116 for driving and rotating the swivel arm 47 of the liquid dispenser 46 are presented in Figures 13 and 14. The gearing mechanism includes a first gear wheel or spur wheel 110 that is coupled to the drive axle of the electric motor 48. The first gear wheel 110 includes a toothing 111 on a circumferential rim of the first gear wheel 110 meshing with a toothing 112 that is on a circumferential rim 114 of the second gear wheel 109. The second gear wheel 109 includes a hub 113 and the swivel arm 47 is coupled to the hub 113. The bearing 54 (Figure 11) is located between the hub 113 and the holding plate 29 providing the hinge 53 for the swivel arm 47. The hub 113 is surrounded by a rim for holding an insert 108, and the insert 108 provides the passage 62 for the dispensing tube 52 for guiding the dispensing tube 52 into the swivel arm. The second gear wheel 109 includes a plurality of spokes 115 connecting the rim of the hub 113 to the circumferential rim 114. The spokes 115 are tangentially oriented and bias the circumferential rim of the second gear wheel 112 towards the first gear wheel 110 thus keeping the teeth of the toothing 112 of the second gear wheel 109 in contact with the teeth of the toothing 111 of the first gear wheel 110. Any wear of the teeth is compensated for by the bias provided by the spokes. A tight fit with a controlled play between the toothings 111,112 provides an accurate rotation of the swivel arm 47 and therewith an accurate positioning of the lumen in the swivel arm above the openings of the well plate.

An alternative embodiment for the second gear wheel is presented in Figure 15. The hub 113 of the second gear wheel 109 is coupled to the circumferential rim 114 via an elastic O-ring 117 for providing the bias for the meshed engagement of the toothings 111, 112.

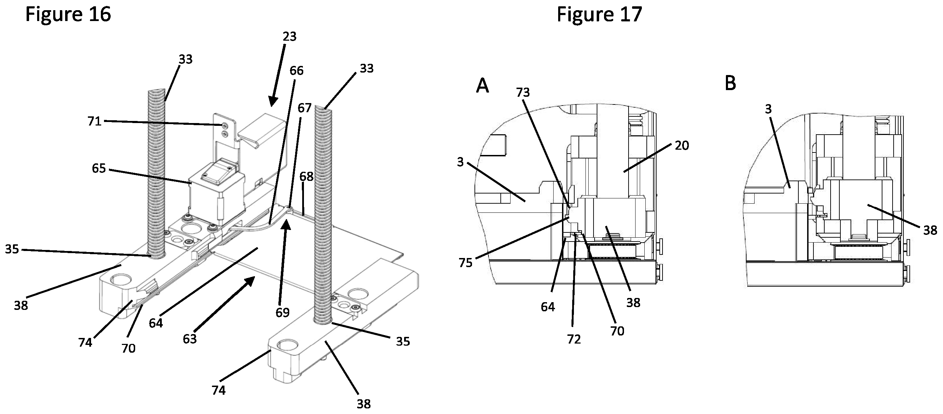

In an embodiment, the SPE apparatus includes a drop protection device 63 as presented in Figure 16. The drop protection device 63 includes a drop protection plate 64 positioned between the two beams 38 of the second lift device 23. The drop protection plate 64 is rectangular shaped and the edges 72 (see Figure 17a) engage longitudinal grooves 70 on each beam 38 such that the drop protection plate 64 can slide back and forth between the two beams 38. The two longitudinal grooves 70 are located vertically below the holders 75 on each beam 38. The holders 75 are configured to hold the labware component 3. The drop protection plate 38 can therefore slide back and forth below the bottom surface of the labware component present on the second lift device. The drop protection plate 64 may be made from a sheet of metal or from a sheet of a polymeric material or from a sheet of cardboard. The drop protection plate may comprise a plurality of sheets that can shift over each other in a telescopic arrangement. The drop protection plate may be permanently installed in the second lift device or may be a disposable labware component that can be replaced easily. The drop protection plate may be coated with a hydrophobic coating or a coating that may change its color when liquid droplets are on the surface of the coating. The color change may be sensitive to the pH of the liquid droplets attaching to the surface. Alternatively, a change in capacitance is detected when droplets are attached to the drop protection plate. The changes in capacitance or color may be used to determine the lifetime of the drop protection plate 64.

The drop protection device 63 includes an electric drive for moving the drop protection plate 64 horizontally between the two beams 38. The electric drive includes an electric motor 65 for driving a link motion system 69. The link motion system 69 includes an arm 66 and one end of the arm is connected to the drive axle of the electric motor 65 and the other end of the arm includes a pin 67 engaging a guide slot 68 in the drop protection plate 64. The guide slot 68 in the plate is oriented perpendicular to axis for moving the plate between the two beams. Rotation of the electric motor 65 activates the link motion system 69 and rotation of the arm 66 ensures that the drop protection plate 64 axially moves as the pin 67 slides through the guide slot 68. The movement of the protection plate can be reversed by reversing the rotation direction of the drive axle of the electric motor 65. A connection plate 71 is attached to the electric motor 65 and/or beam 38 for guiding the wiring connecting the electric motor 65 to the control unit with the control circuit. The drop protection device 63 is directly coupled to the beams 38 of the second lift device 23 which are moved up and down the elevator shaft by rotation of the threaded rods 33 engaging threaded nuts 35. The beams 38 are guided by the guide pillars 20 during the vertical movement (see Figure 17a). In an alternative embodiment, the drop protection device 63 has its own elevator device. The drop protection device 63 may protect the top surface of labware components positioned below the second lift device 23, for example protect a collection plate that is positioned or will be positioned below a filter plate that is between the beams 38 on holders 75 of the second lift device 23.

During solid phase extraction, different liquids are subsequently loaded and pressed through the filter packaging of the filter plate and the filtered liquids are collected in a waste tray or finally in the collection plate. The filter plate is washed with washing liquid to leach-out the non-desired components absorbed by the packaging material in the filter plate. The washing liquid may spray from the outlet nozzles of the filter plate and liquids may splash back from the waste tray towards the filter plate. Liquid droplets may therefore remain attached to the nozzles or the bottom surface of the filter plate which may subsequently drop onto the collection plate used in the subsequent elution step. Coalescence of adhered droplets may occur and drop down onto the collection plate thereby contaminating the eluent liquid that is pressed through the filter plate and thereby potentially contaminate the collected eluate in the collection plate. The collection plate has to be moved first below the filter plate, stay below the filter plate during the elution step and finally needs to be transported for further processing along the shuttle pathway. The drop protection plate 64 is moved below the filter plate before moving the collection plate below the filter plate and the drop protection plate 64 is retracted when the collection plate has been removed from below the filter plate. This ensures that the top surface of the collection plate is protected from droplets originating from previous treatment steps.

The beams 38 of the second lift device include alignment features for horizontally and/or vertically aligning the labware component when the labware component is placed between the two beams 38. The first alignment feature: Each of the two beams 38 includes a longitudinally extending first chamfer 73 (see Figure 17a). The planes of the two chamfers 75 diverge towards the roof plate of the SPE apparatus and the holders 75 for holding the labware component by each beam 38 are positioned vertically below the chamfers 75. A labware component lowered between the two beams (or the beams 38 are lifted by the second lift device 23) may first contact the chamfers 75 when approaching the holders 75. The chamfers 75 may self-align the labware component when the champers abut a bottom surface of the labware component during the approach until the labware component is placed onto the holders 75 (See Figure 17b). The second alignment feature: The front end of each beam 38 includes a second chamfer 74 and the two chamfers 74 are oriented divergent to each other providing an entrance section for horizontally moving a labware component between the two beams 38. The front end of the labware component may abut one of the two chamfers 75 thereby self-aligning the labware component when horizontally moved between the two beams.

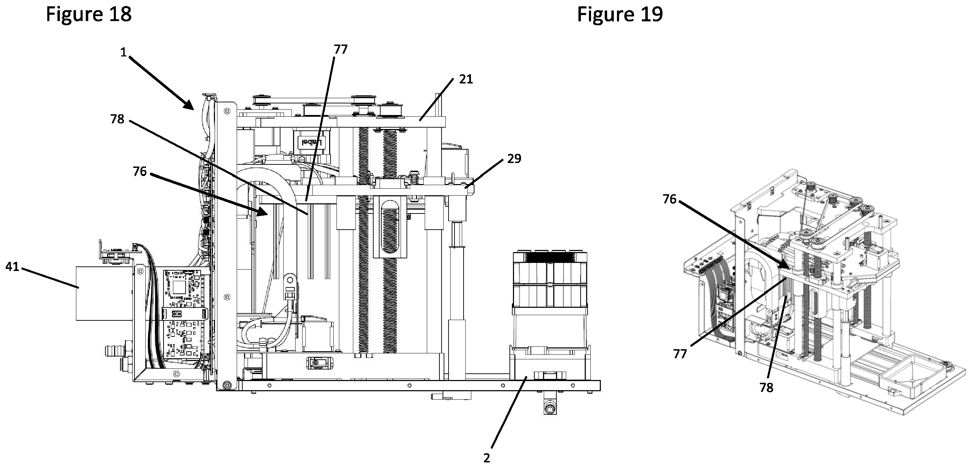

The SPE apparatus 1 may include an evaporator unit 76 as depicted in Figures 18 and 19. The evaporator unit 76 may be used to concentrate sample liquids that are, for example, collected in a collection plate by evaporation of the solvent using hot air or hot nitrogen. The evaporator unit 76 is coupled to the holding plate 29 used for holding the manifold plate that will be described below. The evaporator unit 76 can move vertically together with the holding plate 29 using the first lift device. The evaporator unit 76 may be releasably coupled to the holding plate 29 for a modular arrangement within the SPE apparatus. The evaporator unit may thus be coupled to the holding plate when needed. Alternatively, the evaporator unit is an integral part of the SPE apparatus and cannot be easily removed. The evaporator unit 76 includes an evaporator manifold 77 for distributing incoming air or nitrogen to a plurality of hollow evaporation tubes 78 that axially extend along the z-axis. A labware component, for example a collection plate containing liquid samples, may be placed below the evaporation unit using the shuttle 2 moving horizontally along the shuttle pathway. Alternatively, the evaporation unit can move horizontally within the holding plate 29 to a position above the labware component. In yet another alternative both the evaporation unit 76 and the labware component are moved towards each other.

After positioning the evaporator unit 76 above the labware component, the evaporator tubes 78 of the evaporator unit 76 are inserted into the labware component. The first lift device may be lowered for lowering the holding plate 29 carrying the evaporator unit and/or the labware component may be raised using the second lift device. Hot air or nitrogen is flushed through the evaporator manifold 77 into the evaporation tubes 78 for evaporating the solvents that can be finally removed from the SPE apparatus via the vapor exhaust 41.

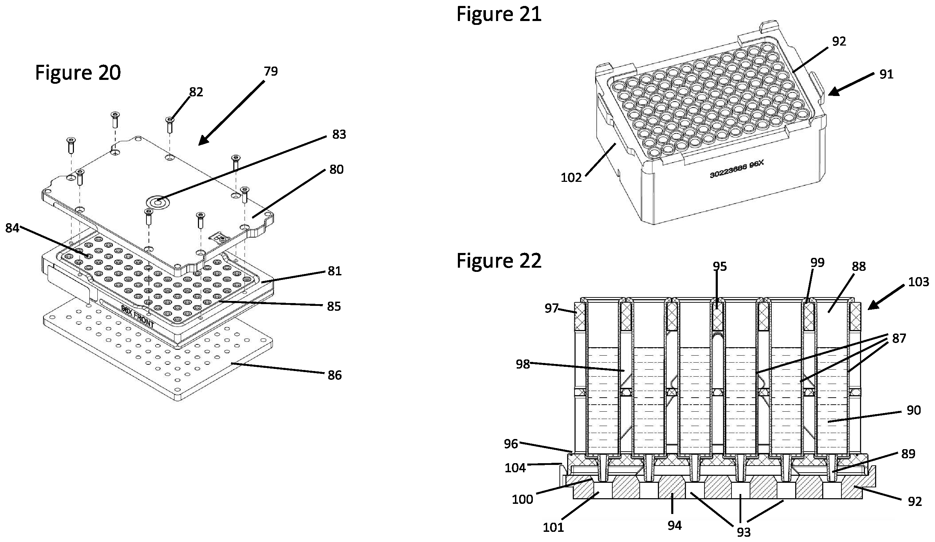

A manifold plate 79 for applying positive pressure to a filter plate is presented in Figure 20. The manifold plate 79 may be fixedly attached to the holding plate 29 of the first lift device and the manifold plate 79 can be lowered by the first lift device for contacting the top surface of the labware component positioned below that manifold plate. The manifold plate 79 may be exchangeable for a manifold plate adjusted to another well-plate format using a connector device thereby providing a modular approach to the SPE apparatus. The manifold plate 79 includes a top plate 80 with a connector 83 for connecting the manifold plate to a pressure supply unit. The pressure is distributed across a plurality of outlet openings 84 present in a bottom plate 81. The top plate 80 and the bottom plate 81 are attached to another using screws 82. An internal seal 85 is sandwiched between the top and bottom plate providing a pressure resistant sealing. An outlet seal 86 is provided on the bottom surface of the bottom plate 81 which may be compressed when the manifold plate 79 is lowered for contacting the labware component, or alternatively, the labware component is raised towards the manifold plate. The outlet seal 79 provides a pressure resistant sealing for effective transfer of the compressed gas from the inlet of the connector 83 to the wells of the labware component that are aligned with the outlet openings 84 of the manifold plate 79.

Figure 21 presents a nozzle separator 91 that may be placed below a filter plate or filter rack. The nozzle separator 91 includes a nozzle separator plate 92 and spacer 102. The spacer 102 includes walls surrounding the nozzle separator plate 92 that mechanically support the nozzle separator plate 92. The spacer 102 may include further parts of the nozzle separator such as receiving section or fluid guiding sections that will be discussed below. Both the nozzle separator plate 92 and the spacer 102 may be provided as disposable labware consumables or one or both components are provided as reusable parts. A semi-disposable nozzle separator 91 may include a disposable nozzle separator plate 92 and a reusable spacer 102. The nozzle separator may be made from a metal or from a polymeric material. A disposable nozzle separator plate 92 may be made, for example, from an injection molded polymer selected from polypropylene, polyethylene, polystyrene, polymethyl-methacrylate, polycarbonate or the like. The plate may be made from a recycled polymer or from a biopolymer to lower the carbon footprint of the disposable component.

Figure 22 displays an assembly of a filter plate or filter rack 103 and a nozzle separator plate 92 placed below the filter plate or filter rack 103. The filter plate or filter rack 103 includes a plurality of cylinders or columns 87, for example provided as syringes, and each cylinder defines a longitudinal axis which are oriented parallel to another. Each cylinder 87 includes a proximal opening 88 as a liquid inlet and a nozzle 89 distal to the opening providing a liquid outlet. A filter 90 with a solid packaging material is located between the opening 88 and the nozzle 89. The plurality of cylinders is embedded in frame 95 including connecting bars 98 for connecting a top plate 97 to a bottom plate 96. The top plate and bottom plate are oriented perpendicular to the axis defined by the cylinders 87 and the frame provides mechanical support to the plurality of cylinders such that the plurality of openings 88, and therewith also the plurality of nozzles 89, are oriented according to a repetitive pattern, for example according to an SLAS or ANSI pattern for a well plate. The cylinders 87 protrude through the top plate 97 and a flange 99 abuts the top surface of the top plate 97. The nozzles 89, or at least a distal end of the nozzles protrudes through the bottom surface of the bottom plate 96.

Figure 22 further displays a cross section of the nozzle separator plate 92 positioned horizontally below the filter plate or filter rack 103. The nozzle separator plate 92 includes a plurality of openings 93 and the centers of the openings are oriented to the same repetitive pattern for the nozzles 89 such that each nozzle fits into an opening 93 and is separated from a neighboring nozzle by a wall 94 of the nozzle separator plate 92. Each opening 93 includes a receiving section 100 and a fluid guiding section 101. The receiving section 100 may be conically shaped, or cup shaped for receiving the distal tip of the nozzle 89 and the fluid guiding section 101 channels and separates the output from each nozzle into, for example a waste tray. Nozzle spray from each nozzle is separately collected in the receiving section of each opening 93 and splash back of fluids from one nozzle to another nozzle is prevented due to the fluid guiding sections 101 separating the nozzles from each other. The nozzle separator plate 92 may include a rim or protrusion 104 which at least partially surrounds the nozzle separator plate 92 for guiding and aligning the separator plate when stacked between the filter rack 103 and the spacer 102. The protrusions 104 may have a chamfer facilitating self-alignment during stacking.

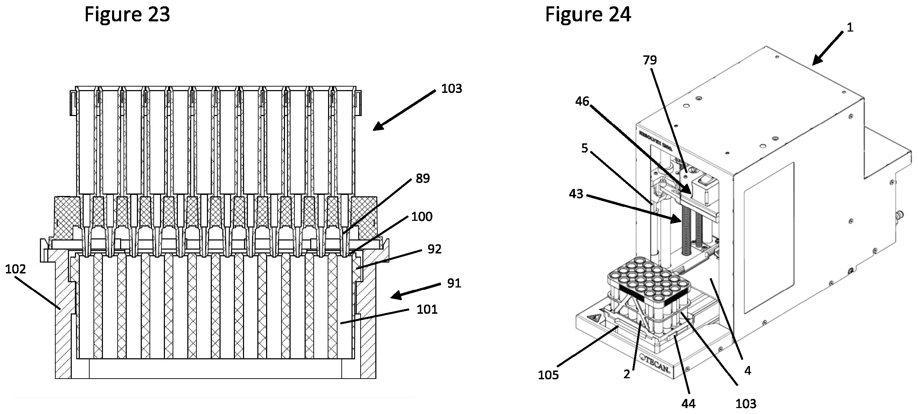

Figure 23 presents a cross section for the assembly of the filter plate or filter rack 103 with a 96-well plate format stacked on top of a nozzle separator 91. The nozzle separator 91 includes the nozzle separator plate 92 that is sandwiched between the filter plate 103 and the spacer 102. Each of the nozzles 89 is received in a receiving section 100 of the nozzle separator and fluid may be channeled through the guiding sections 101 into a waste tray stacked below the spacer 102.

The stack of the filter plate 103 on top of the waste tray 105 positioned on the shuttle 2 in the out of elevator position 44 is presented in Figure 24. Alternatively, the waste tray is part of the shuttle 2. The filter plate 103 is ready to be moved along the shuttle pathway 4 towards the opening 5 to a position allowing the swivel arm of the reagent dispenser 46 to dispense reagent, for example conditioning liquid or washing liquid into the wells of the filter plate. The filter plate 103 may be moved further along the shuttle pathway 4 through the elevator opening 5 into the elevator shaft 43 to a position below the manifold plate 79. The manifold plate 79 may be lowered for contacting the filter plate 103 and pressure is subsequently applied to the manifold plate forcing the liquid through the filters into the waste tray 2. The waste tray 2 may be connected to the waste collector 6, or in the alternative embodiment where the waste tray is part of the shuttle: The shuttle may be connected to the waste collector 6. After filtering, the manifold plate 79 is raised and the filter plate 103 is available for further processing.

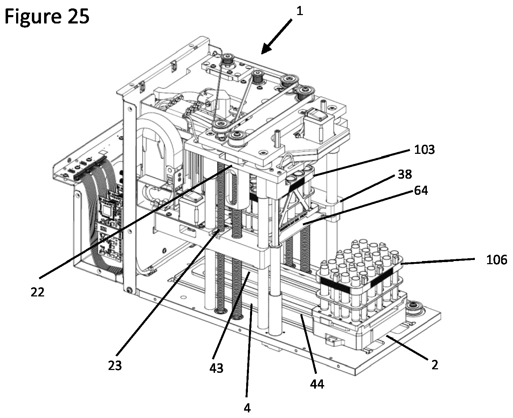

Figure 25 presents the SPE apparatus 1 with cover removed and a collection plate 106 positioned on the shuttle 2 in the out of elevator position 44. There may be other components such as a waste tray or nozzle separator stacked below the collection plate as this may facilitate previous/subsequent processing steps in a system including the SPE apparatus and the laboratory automation apparatus as will be explained in further detail below. The collection plate 106 is ready to be moved into the elevator shaft 43 below the filter plate 103 that has been lifted by the second lift device 23. The two beams 38 of the second lift device carry the filter plate 103 such that a gap is available below the filter plate 103 for the collection plate 105. The bottom surface of the filter plate 103 is shielded by the drop protection plate 64 such that droplets cannot fall onto the collection plate 105 when moved into the elevator shaft. The drop protection plate 64 is retracted by the drop protection device when the collection plate 106 has been moved by the shuttle 2 to a position below the filter plate 103. The first lift device 22 may be lowered to compress the stack of the filter plate and the collection plate and apply pressure to the manifold plate such that eluent liquid is pressed through the filters and the eluate is collected in the collection plate 106.

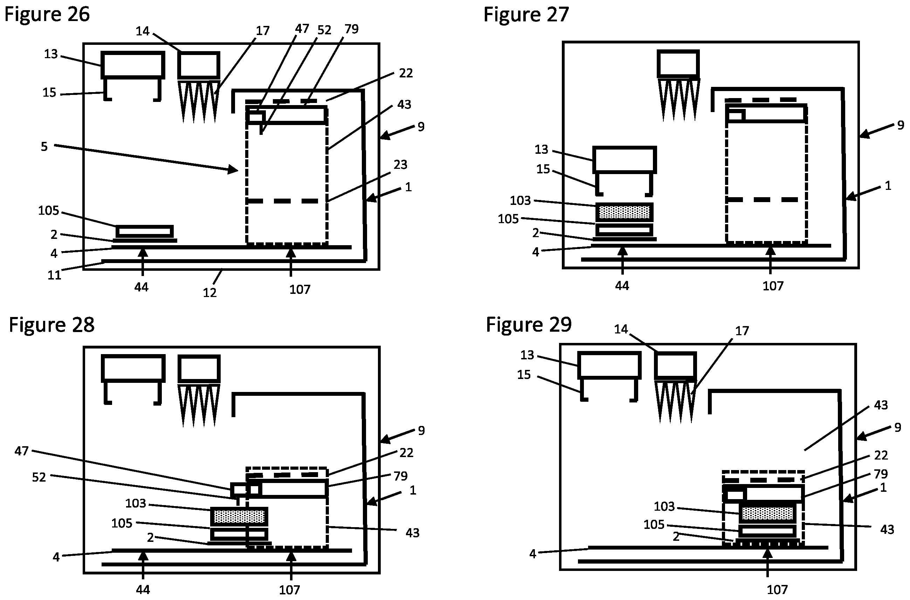

The method for using the SPE apparatus in a system including the SPE apparatus and the laboratory automation apparatus is explained in Figures 26 to 43. A lateral view for a schematic representation of an SPE apparatus 1 positioned on the working surface 12 of the working table of the laboratory automation apparatus 9 is presented in Figure 26. The base plate 11 of the SPE apparatus is positioned onto the working surface 12. The laboratory automation apparatus 9 includes the first transfer mechanism 13 with the gripper 15 for gripping, moving, and placing the labware components on the shuttle 2 of the SPE apparatus. The laboratory automation apparatus furthermore includes the second transfer mechanism 14 configured to hold pipetting tips 17 for aspirating and dispensing liquid samples. A waste tray 105 may be placed onto the shuttle 2 using the first transfer mechanism 13 or has been placed manually onto the shuttle 2. Alternatively, the waste tray is incorporated into the shuttle 2 and no separate waste tray is used. The shuttle 2 can be moved using the shuttle drive from an out-of-elevator position 44 along the shuttle pathway 4 through the opening 5 to an in-elevator position 107. The SPE apparatus 1 includes the first lift device 22 for moving the manifold plate 79 which also holds the swivel arm 47 with the dispensing tube 52. The space between the manifold plate 79 defines the elevator shaft 43 and labware components can be horizontally moved into the elevator shaft 43 using the shuttle 2 and can be vertically moved or lifted using the second lift device 23.

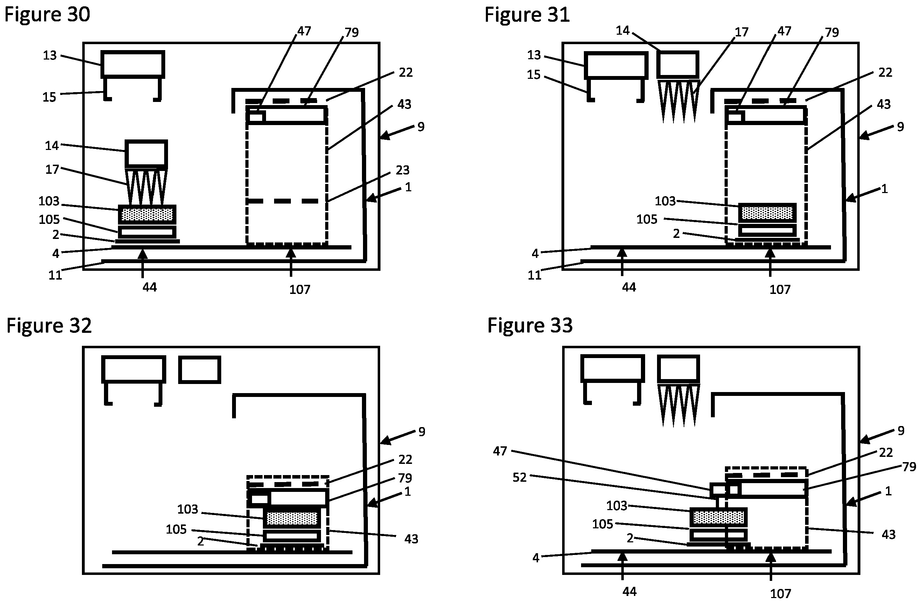

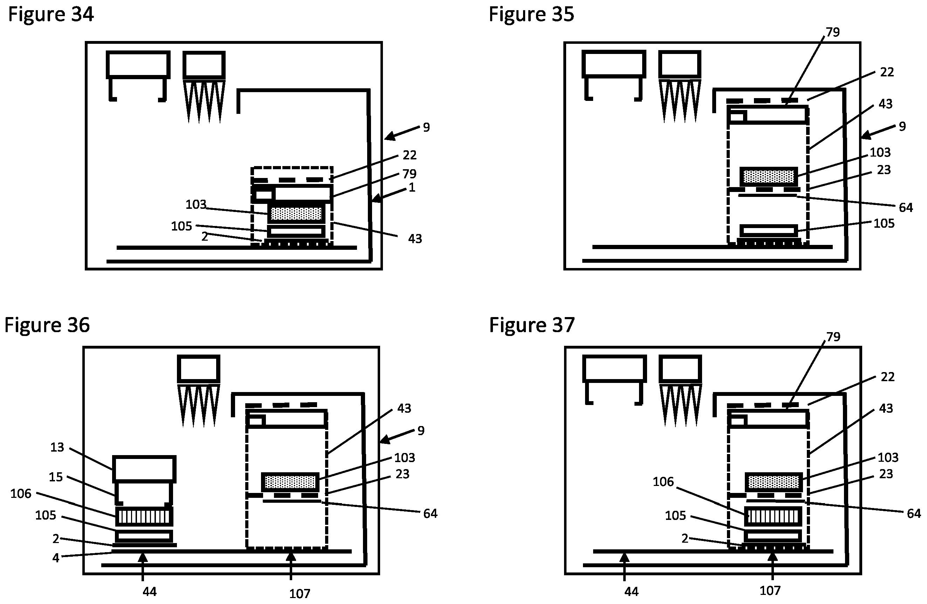

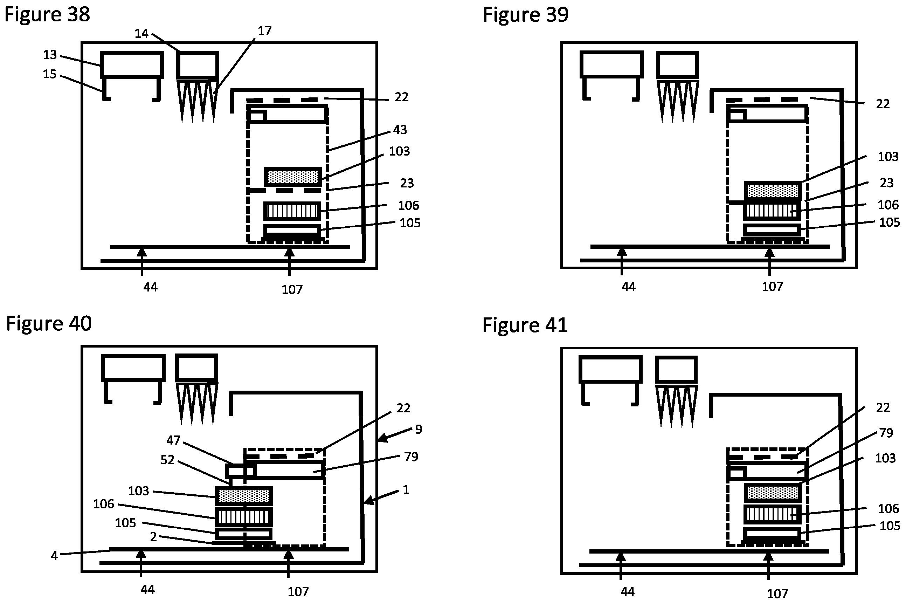

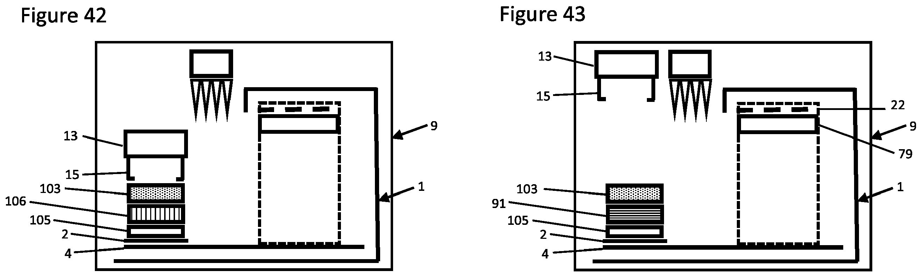

The first transfer mechanism 13 with gripper 15 has placed a filter plate or filter rack 103 on top of the waste tray 105 as visualized in Figure 27. The shuttle 2 remains in the out-of-elevator position 44. Optionally, a spacer may be placed between the waste tray 105 and the filter plate 103, or as another option the nozzle separator may be placed between the filter plate and the waste tray as will be presented further below in Figure 43. The shuttle 2 is subsequently moved along the shuttle pathway 4 to a dispensing position between the out-of-elevator position 44 and the elevator position 107 as depicted in Figure 28. The manifold plate 79 has been lowered to a position just above the top surface the filter plate 103 using the first lift device 22 and the dispensing tube 52 of the swivel arm 47 has been rotated out of the elevator shaft 43 such that the dispensing tube 52 is aligned with an opening or well of the filter plate 103. Conditioning liquid is dispensed using the liquid reagent supply unit. A subsequent opening will be approached by rotating the swivel arm 47 and/or moving the shuttle 2 and conditioning liquid will thus be dispensed until the programmed number of wells have all been loaded with conditioning liquid. Once the programmed openings are filled, the swivel arm is rotated back to the parking position and the shuttle 2 is moved into the elevator shaft 43 as presented in Figure 29. The manifold plate 79 of the SPE apparatus 1 is lowered using the first lift device 22 and pressure is applied to the stack of the loaded filter plate 103 and the waste tray 105 using the manifold plate 79. The conditioning liquid is forced through the filter packaging and collected in the waste tray 105. The manifold plate 79 with the swivel dispenser 47 is raised using the first lift device 22 such that the shuttle can be moved from the in-elevator position 107 to the out-of-elevator position 44, see Figure 30. The second transfer mechanism 14 with the pipetting head carrying the pipetting tips 17 aspirates the sample liquid from sample liquid containers or from sample liquid well plates. The second transfer mechanism 14 directs the pipetting tips 17 to the openings of the filter plate 103 and dispenses sample liquid onto the conditioned filters of the filter plate. The shuttle 2 is moved back into the elevator shaft 43 as shown in Figure 31 and the manifold plate 79 is subsequently lowered to contact the top surface of the stack of the waste tray 105 and the filter plate 103. Pressure is applied to the manifold plate 79 such that the sample liquid is pressed through the packaging of the filter plate 103 as presented in Figure 32. The manifold plate 79 is raised and the shuttle 2 is moved to intermediate positions along the shuttle pathway 4 such that the swivel arm 47 can be rotated and dispend washing liquid pumped from the liquid reagent supply unit into the openings of the filter plate 103, see Figure 33. The shuttle 2 is moved back into the elevator shaft 43 when the desired number of openings have been filled with washing liquid and the manifold plate contacts the stack with the filter plate 103 and pressure is again applied to the manifold plate 79 thereby pushing the washing liquid through the filter plate into the waste tray 105, see Figure 34. The first lift device 22 is subsequently raised for moving the manifold plate 79 upwards to create space in the elevator shaft 43 such that the second lift device 23 can lift the filter plate 103 from the waste tray 105, see Figure 35. Optionally, the drop protection plate 64 incorporated in the second lift device 23 is moved below the filter plate 103 thereby protecting labware components located below the filter plate from droplets that may drop down from that filter plate. The shuttle 2 is moved along the shuttle pathway 4 from the in-elevator position 107 to the out-of-elevator position 44. The first transfer mechanism 13 using gripper 15 stacks a collection plate 106 on top of the waste tray 105 as presented in Figure 36. Optionally, the waste tray 105 is first removed by the first transfer mechanism 13 such that the collection plate is directly placed onto the shuttle 2. The stack including the collection plate 106 is moved along the shuttle pathway 4 to the in-elevator position 107 as shown in Figure 37. During the movement, the drop protection plate 64 remains below the filter plate 103 thereby shielding the bottom surface of the filter plate and preventing droplets from contaminating the collection plate 106 moving below the filter plate 103. The drop protection plate 64 is retracted once the collection plate 106 is positioned below the filter plate 105, see Figure 38. The second lift device 23 is lowered for stacking the filter plate 103 on top of the collection plate 106, see Figure 39. The shuttle is moved to intermediate positions between the elevator position 107 and the out-of-elevator position 44 and the manifold plate 79 with the swivel arm 47 is lowered by the first lift device 22 to position the dispensing tube 52 of the swivel arm 47 above the top surface of the filter plate 103. The swivel arm 47 is rotated and eluent liquid is dispensed via the dispensing tube 52 into the openings of the filter plate, see Figure 40. The swivel arm 47 is rotated back into the parking position when the desired number of openings have been filled with eluent liquid, the shuttle is moved into the elevator shaft and the manifold plate 79 is lowered for applying pressure to the eluent liquid in the filter plate such that the eluate can be collected in the collection plate 106 (Figure 41). The shuttle 2 with the stack including the filter plate 103 on top of the collection plate 106 is moved to the out-of-elevator position and the gripper 15 of the first transfer mechanism of the laboratory automation apparatus 9 can unstack the stack such that the collection plate is available for further analysis or for another pipetting step using the second transfer mechanism, see Figure 42. As an option, the collection plate is moved below the evaporation unit (see Figures 18 and 19) for concentrating the filtered samples before further processing,

As another option, the nozzle separator 91 may be placed between the filter plate 103 and the waste tray 105, see Figure 43.

The steps for conditioning of the filter plate, the filling with the sample liquid, the washing of the filter plate and the collection of the eluate remain identical to described above.

### LIST OF REFERENCE SIGNS

- 1: SPE apparatus
- 2: Shuttle
- 3: Labware component
- 4: Shuttle pathway
- 5: Elevator opening
- 6: Waste collector
- 7: Dispenser control box
- 8: Evaporator control box
- 9: Laboratory automation apparatus
- 10: Liquid reagent supply unit
- 11: Base plate SPE
- 12: Working surface
- 13: First transfer mechanism
- 14: Second transfer mechanism
- 15: Gripper
- 16: Pipetting head
- 17: Pipetting tips
- 18: Liquid reagent containers
- 19: Cover
- 20: Guide pillars
- 21: Roof plate
- 22: First lift device
- 23: Second lift device
- 24: Electric motor shuttle drive
- 25: Electric motor first lift device
- 26: Electric motor second lift device
- 27: Drive belt first lift device
- 28: Drive belt second lift device
- 29: Holding plate
- 30: Drive pulley first lift device
- 31: Drive pulley second lift device
- 32: Threaded rod first lift device
- 33: Threaded rod second lift device
- 34: Threaded insert first lift device
- 35: Threaded nut second lift device
- 36: Bushing first lift device
- 37: Bushing second lift device
- 38: Beams second lift device
- 39: Control unit
- 40: Printed circuit board
- 41: Vapor exhaust
- 42: Connector PCB
- 43: Elevator shaft
- 44: Out-of-elevator position
- 45: Strip conductor
- 46: Reagent dispenser
- 47: Swivel arm
- 48: Electric motor
- 49: Priming station
- 50: Drain priming station
- 51: Priming tray
- 52: Dispensing tube
- 53: Hinge
- 54: Bearing
- 55: Lumen
- 56: Bushing
- 57: First end
- 58: Second end
- 59: 96-well plate
- 60: Well
- 61: Cut out
- 62: Passage
- 63: Drop protection device
- 64: Drop protection plate
- 65: Electric motor
- 66: Arm
- 67: Pin
- 68: Guide slot
- 69: Link motion system
- 70: Longitudinal groove
- 71: Connecting plate
- 72: Edge
- 73: First chamfer
- 74: Second chamfer
- 75: Holder
- 76: Evaporator unit
- 77: Evaporator manifold
- 78: Evaporation tubes
- 79: Manifold plate
- 80: Top plate
- 81: Bottom plate
- 82: Screws
- 83: Connector
- 84: Outlet openings
- 85: Internal seal
- 86: Outlet seal
- 87: Cylinders
- 88: Opening
- 89: Nozzle
- 90: Filter
- 91: Nozzle separator
- 92: Nozzle separator plate
- 93: Openings
- 94: Wall
- 95: Frame
- 96: Bottom plate
- 97: Top plate
- 98: Connecting bars
- 99: Flange
- 100: Receiving section
- 101: Fluid guiding section
- 102: Spacer
- 103: Filter plate, Filter rack
- 104: Protrusion, rim
- 105: Waste tray
- 106: Collection plate, collection rack
- 107: In-elevator shaft position
- 108: Insert
- 109: Second gear wheel
- 110: First gear wheel, spur wheel
- 111: Toothing first gear wheel
- 112: Toothing second gear wheel
- 113: Hub
- 114: Circumferential rim
- 115: Spoke
- 116: Gearing mechanism
- 117: O-ring

## Claims

1. A solid phase extraction apparatus (1) comprising
- a base plate (11),
- a manifold plate (79) oriented parallel and positioned vertical above the base plate (11) thereby defining an elevator shaft (43), the manifold plate (79) being configured to provide positive pressure to a labware component (3) when the labware component contacts the manifold plate,
- a lift device (23) positioned in the elevator shaft below the manifold plate with a holder (75) for receiving and holding the labware component (3); the lift device (23) is configured for reciprocally moving the labware component (3) vertically between the base plate (11) and the manifold plate (79),
**characterized by** a drop protection device (63) configured for selectively shielding the bottom surface of the labware component (3) and thereby shielding the top surface of another labware component positioned below the labware component.

2. The solid phase extraction apparatus according to claim 1, wherein the drop protection device (63) comprises a drop protection plate (64) located between the holder (75) and the base plate (11), the drop protection plate (64) being oriented parallel to the base plate and reciprocally moveable horizontally for selectively shielding the bottom surface of the labware component.

3. The solid phase extraction apparatus according to claim 2, wherein the holder (75) for receiving and holding the labware component (3) comprises two parallel beams (38) horizontally spaced apart and oriented parallel to the base plate for receiving the labware component (3) between the two parallel beams, the two parallel beams are configured to move simultaneously up or down in the elevator shaft.

4. The solid phase extraction apparatus according to claim 3, wherein the drop protection device (63) is integral part of the lift device (23) and moveable in the vertical direction together with the lift device, and the drop protection plate (64) is reciprocally moveable between the two parallel beams (38).

5. The solid phase extraction apparatus according to claim 4, wherein each of the two parallel beams (38) comprises a horizontally oriented grooves (70) for holding and guiding two parallel edges (72) of the drop protection plate (64).

6. The solid phase extraction apparatus according to claims 4 or 5, wherein the drop protection device (63) includes an electric drive comprising and electric motor (65) and a link-motion system (69) or gearing arrangement for reciprocally moving the drop protection plate (64) between the two parallel beams (38) between a shielded position for shielding the bottom surface of the labware component (3) and a deshielded position not shielding the bottom surface of the labware component.

7. The solid phase extraction apparatus according to claim 6, wherein the link-motion system (69) comprises a swivel arm (66) and wherein one end of the swivel arm is coupled to the electric motor and the other end of the swivel arm comprises a guide pin engaging a linear guide slot (68) in the drop protection plate (64).

8. The solid phase extraction apparatus according to any one of claims 3 to 7 , wherein each of the two parallel beams (38) comprises a first chamfer (73), and the two first chamfers are oriented along the beam axis of each beam and the two planes of the two chamfers are oriented divergent with respect to the manifold plate for guiding and centering the labware (3) component when the two parallel beams move simultaneously up in the elevator shaft.

9. The solid phase extraction apparatus according to claim 8 wherein each of the two parallel beams (38) comprises a second chamfer (74) and the two second chamfers are positioned at a front surface of the beams and oriented divergent to each other providing an entrance section for guiding and aligning the labware component (3) between the beams when the labware component is horizontally moved into the lift device (23).

10. The solid phase extraction apparatus according to any of the previous claims further comprising two lift devices (22, 23), a first lift device (22) for reciprocally moving the manifold plate (79) vertically relative to the base plate (11) and a second lift device (23) positioned vertically below the first lift device for receiving and holding the labware component (3).

11. The solid phase extraction apparatus according to claim 10, further comprising a shuttle (2) mounted on the base plate (11) and reciprocally moveable along a horizontal length of the base plate thereby defining a shuttle pathway (4), the shuttle being configured to transport the labware component (3) into and out of the elevator shaft (43) for positioning the labware component below the manifold plate (79) and/or for inserting the labware component (3) into the second lift device (23).

12. The solid phase extraction apparatus according to claim 11, wherein the labware component is a filter plate (103) and wherein the drop protection device (63) with the drop protection plate (64) selectively shields the bottom surface of the filter plate when a collection plate (106) as the another labware component is positioned or moved below the filter plate (103) by the shuttle (2).

13. The solid phase extraction apparatus according to claim 12, further comprising:
- sensors for detecting the horizontal position of the shuttle (2) on the shuttle pathway (4), or the horizontal position of the filter plate (103) or collection plate (106) within the elevator shaft (43),
- sensors for detecting the vertical position of the holder (75) of the second lift device (23) in the elevator shaft (43) holding the filter plate (103),
- sensors for detecting the horizontal position of the drop protection plate (64).

14. The solid phase extraction apparatus according to claim 13, further comprising a control unit (39) with a control circuit wherein the detected horizonal or vertical positions are used for controlling the solid phase extraction apparatus.

15. A solid phase extraction method using the solid phase extraction apparatus (1) according to claim 12, the method comprises the following steps:
- presenting a filter plate (103) on the shuttle (2) in the out of elevator position (44) of the solid phase extraction apparatus,
- loading the filter plate (103) with a sample liquid,
- moving the shuttle (2) along the shuttle pathway (4) into the elevator shaft (43),
- lowering the manifold plate (79) of the solid phase extraction apparatus using the first lift device (22) for creating a tight fit between the filter plate and the manifold plate and applying pressure to the manifold plate for pressing the sample liquid through the filter plate,
- raising the manifold plate (79) using the first lift device (22),
- moving the shuttle (2) with the filter plate (103) along the shuttle pathway (4) to the out of elevator position (44),
- loading the filter plate with a washing liquid,
- moving the shuttle with the filter plate into the elevator shaft (43),
- lowering the manifold plate (79) using the first lift device (22) for creating a tight fit between the filter plate (103) and the manifold plate (79) and applying pressure to the manifold plate for pressing the washing liquid through the filter plate,
- raising the manifold plate (79) using the first lift device (22),
- raising the second lift device (23) with the holder (75) for lifting the filter plate (103) in the elevator shaft (43) thereby creating a space available for receiving the collection plate (106) and simultaneously moving the drop protection plate (64) below the bottom surface of the filter plate (103) using the drop protection device (63) for shielding the available space from droplets dripping towards the base plate,
- moving the shuttle (2) along the shuttle pathway (4) to the out of elevator position (44),
- placing the collection plate (106) on the shuttle (2),
- moving the shuttle with the collection plate into the elevator shaft until the collection plate (106) is positioned below the filter plate (103),
- deshielding the bottom surface of the filter plate by moving the drop protection plate (64) using the drop protection device (63),
- lowering the second lift device (23) for stacking the filter plate (103) on top of the collection plate (106),
- moving the shuttle (2) with the stack of the filter plate and collection plate along the shuttle pathway (4) to the out of elevator position (44),
- loading the filter plate (103) with eluent liquid,
- moving the shuttle including the stack of filter plate and collection plate along the shuttle pathway into the elevator shaft,
- lowering the manifold plate (79) of the solid phase extraction apparatus using the first lift device (22) for creating a tight fit between the filter plate (103) and the manifold plate (79) and applying pressure to the manifold plate for pressing the eluent liquid through the filter plate into the collection plate.
